# EUROPEAN PATENT SPECIFICATION

(11) **EP 2 950 997 B1**
(45) Date of publication and mention of the grant of the patent: **30.01.2019**
(21) Application number: 13873892.7
(22) Date of filing: 01.02.2013
(51) Int. Cl.: B29C 45/80, B29C 45/33, B29C 45/26

(54) **MOLDING SYSTEM HAVING AN ADJUSTABLE MOLD SHUT HEIGHT**
FORMSYSTEM MIT EINSTELLBARER FORMSCHLIESSHÖHE
SYSTÈME DE MOULAGE PRÉSENTANT UNE HAUTEUR DE FERMETURE DE MOULE RÉGLABLE

(43) Date of publication of application: 09.12.2015
(60) Divisional application: 18184245.1
(73) Proprietor: Husky Injection Molding Systems Ltd., Bolton, ON L7E 5S5 (CA)
(72) Inventor: WITZ, Jean-Christophe, F-57970 Yutz (FR); KMOCH, Sven, 54518 Platten (DE); FISCH, Ralf Walter, 54439 Saarburg (DE)
(74) Representative: HGF Limited
(86) International application number: PCT/CA2013/050081
(87) International publication number: WO 2014/117246

(56) References cited:
- EP-A1- 2 739 451
- US-A- 5 536 166
- US-A1- 2007 212 443
- US-A1- 2007 212 443

## Description

### FIELD OF THE INVENTION

The present invention generally relates to, but is not limited to, molding systems, and more specifically the present invention relates to, but is not limited to, molding systems having an adjustable mold shut height.

### BACKGROUND OF THE INVENTION

Molding is a process by virtue of which a molded article can be formed from molding material by using a molding system. Various molded articles can be formed by using the molding process, such as an injection molding process. One example of a molded article that can be formed, for example, from Polyethylene Teraphalate (PET) material is a preform that is capable of being subsequently blown into a beverage container, such as, a bottle and the like.

As an illustration, injection molding of PET material involves heating the molding material (ex. PET pellets, etc.) to a homogeneous molten state and injecting, under pressure, the so-melted PET material into a molding cavity defined, at least in part, by a female cavity piece and a male core piece mounted respectively on a cavity plate and a core plate of the mold. The cavity plate and the core plate are urged together and are held together by clamp force, the clamp force being sufficient enough to keep the cavity and the core pieces together against the pressure of the injected PET material. The molding cavity has a shape that substantially corresponds to a final cold-state shape of the molded article to be molded. The so-injected PET material is then cooled to a temperature sufficient to enable ejection of the so-formed molded article from the mold. When cooled, the molded article shrinks inside of the molding cavity and, as such, when the cavity and core plates are urged apart, the molded article tends to remain associated with the core piece. Accordingly, by urging the core plate away from the cavity plate, the molded article can be demolded, i.e. ejected off of the core piece. Ejection structures are known to assist in removing the molded articles from the core halves. Examples of the ejection structures include stripper plates, ejector pins, etc.

When dealing with molding a preform that is capable of being blown into a beverage container, one consideration that needs to be addressed is forming a so-called "neck portion". Typically and as an example, the neck portion includes (i) threads (or other suitable structure) for accepting and retaining a closure assembly (ex. a bottle cap), and (ii) an anti-pilferage assembly configured to cooperate, for example, with the closure assembly to indicate whether the end product (i.e. the beverage container that has been filled with a beverage and shipped to a store) has been tampered with in any way. The neck portion may comprise other additional elements used for various purposes, for example, to cooperate with parts of the molding system (ex. a support ledge, etc.). As is appreciated in the art, the neck portion can not be easily formed by using the cavity and core halves. Traditionally, split mold inserts (sometimes referred to by those skilled in the art as "neck rings") have been used to form the neck portion.

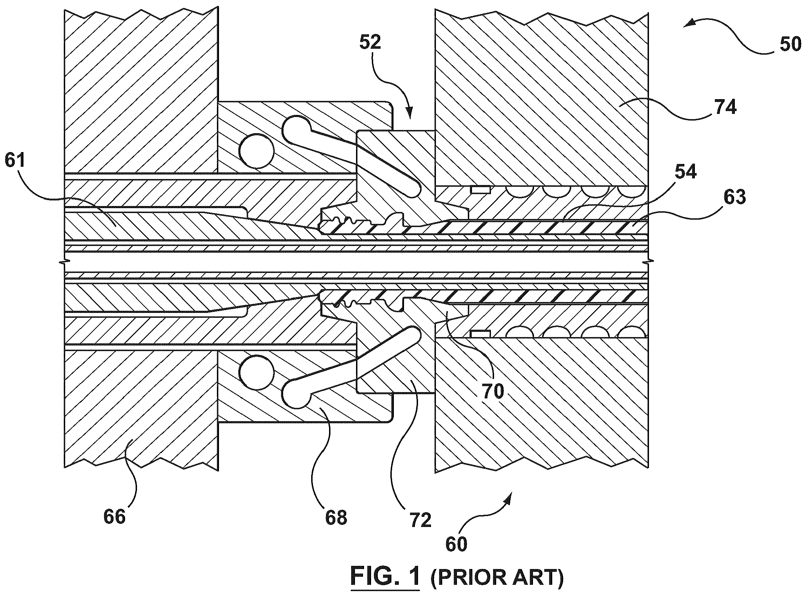

With reference to Figure 1, a section along a portion of an injection mold 50 illustrates a portion of typical molding insert stack assembly 60 that is arranged within a molding system (not depicted). The description of Figure 1 that will be presented herein below will be greatly simplified, as it is expected that one skilled in the art will appreciate general configuration of other components of the injection mold 50 that will not be discussed in the following description.

The molding insert stack assembly 60 includes a neck ring insert pair 52 that together with a mold cavity insert 54, a gate insert (not shown) and a core insert 61 define a molding cavity (not separately numbered) where molding material can be injected to form a molded article, such as a preform 63. In order to facilitate forming of the neck portion of the preform 63 and subsequent removal of the preform 63, the neck ring insert pair 52 comprises a pair of complementary neck ring inserts that are mounted on adjacent slides of a slide pair 68. The slide pair 68 is slidably mounted on a top surface of a stripper plate 66. As commonly known, and as, for example, generally described in United States patent 6,799,962 to Mai et al (granted on October 5, 2004), the stripper plate 66 is configured to be movable relative to a cavity plate assembly 74 and a core plate assembly (not depicted), when the mold is arranged in an open configuration, whereby the slide pair 68, and the complementary neck ring insert pair 52 mounted thereon, can be laterally driven, via a cam arrangement or some other means (not shown), for the release of the molded article from the molding cavity.

A typical neck ring insert has a body that includes a pair of projecting portions 70 that extend from a top and a bottom face of a flange portion 72 (i.e. a top projecting portion and a bottom projecting portion). Typically, the bottom face of the flange portion 72 abuts, in use, a top surface of the slide pair 68. Even though not depicted in Figure 1, one skilled in the art will appreciate that the neck ring insert pair 52 cooperates with suitable fasteners for connecting to a respective one of the slide pair 68. In use, during certain portions of a molding cycle, the top projecting portion cooperates with a female receptacle disposed on the cavity plate assembly 74.

EP2739451, which falls under Article 54(3) EPC, discloses an injection molding machine with distance augmenting structures each having an outbound position, in which the mold closes in a standard molding configuration, and an inbound position, in which a gap is present between mold components. US2007212443 discloses an injection mold with a cam structure between a base of the mold and a slide member thereof, which is configured to maintain a gap between the confronting surfaces as they slide relative to one another to release molded parts from the mold cavities, in order to reduce wear therebetween.

### SUMMARY OF THE INVENTION

The invention provides an injection mold and a method of operating an injection mold as defined in the appended claims.

These and other aspects and features of non-limiting embodiments of the present invention will now become apparent to those skilled in the art upon review of the following description of specific non-limiting embodiments of the invention in conjunction with the accompanying drawings.

### DESCRIPTION OF THE DRAWINGS

A better understanding of the embodiments of the present invention (including alternatives and/or variations thereof) may be obtained with reference to the detailed description of the non-limiting embodiments along with the following drawings, in which:
Figure 1 depicts a cross-section along an operational axis of a molding stack implemented in accordance with known techniques;
Figure 2 is a cross-sectional view through part of a mold;
Figure 2A is an enlarged view of the representative portion that is marked as 2A in Figure 2 including one representative mold stack;
Figure 3 is an isometric view of a core plate of the mold of Figure 2;
Figure 4A is a front elevation view of the core plate of Figure 3;
Figures 4B and 4C are cross-sectional views of the core plate of Figure 4A, along sections 4B-4B and 4C-4C, respectively;
Figure 4D is an enlarged view of the cross-section shown in Figure 4C;
Figure 4E is an enlarged view of the cross-section shown in Figure 4B;
Figure 4F is an enlarged view of the portion 4F in Figure 4E, with a further enlarged portion thereof;
Figure 4G is an enlarged view of the portion 4G in Figure 4E;
Figure 4H is a view of part of the portion 4F in Figure 4E shown in a retracted position, with a portion of a stripper plate of the mold;
Figure 4I is a view of the part of Figure 4H but shown in an extended position, with a portion of a stripper plate of the mold;
Figure 5 is an isometric view of a sub-assembly of the injection mold part of Figure 2;
Figure 6 is an isometric view of another sub-assembly of the injection mold part of Figure 2;
Figure 7 is an isometric view of another sub-assembly of the mold part of Figure 2;
Figure 8A is an isometric view of another sub-assembly of the mold part of Figure 2
Figures. 8B-8C are enlarged views of portions marked 8B, 8C, respectively, of the sub-assembly of Figure 8A;
Figure 8D is a cross-sectional view at section 8D-8D in Figure 4A;
Figure 8E is an enlarged view of portion marked 8E in Figure 8D;
Figure 8F is a top plan view of the portion marked 8B in Figure 8A in one operational position;
Figure 8G is a top plan view of the portion in Figure 8F but in another operational position;

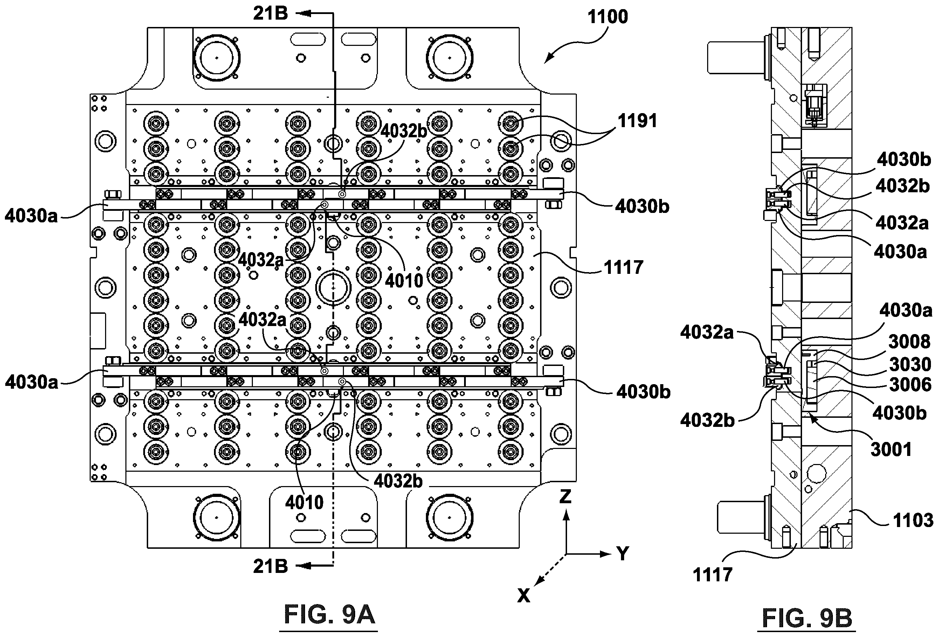

Figure 9A is a front elevation view of a stripper plate of the mold of Figure 2, mounted on the core plate of Figure 3;
Figure 9B is a cross-sectional view of the stripper plate and core plate of Figure 9A at section 9B-9B in Figure 9A.

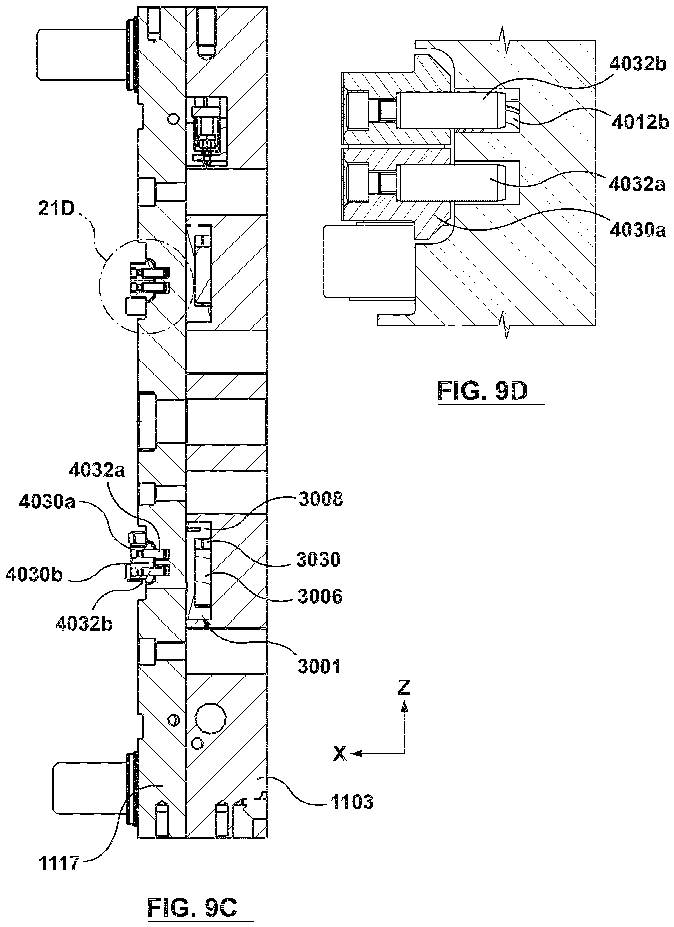

Figure 9C is an enlarged view of the cross-section shown in Figure 9B;
Figure 9D is an enlarged view of the portion marked 9D in Figure 9C;
Figure 10 is an isometric view of a cavity plate of the mold part of Figure. 2;
Figure 11A is a front elevation view of the cavity plate of Figure 10;
Figure 11B is a cross-sectional view of the cavity plate of Figure 11A at section 11B-11B in Figure 11A;
Figure 11C is an enlarged view of the cross-section shown in Figure 11B;
Figure 12 is an enlarged view of the portion marked 12 in Figure 11C;
Figure 13 is an exploded view of a part shown in Figure 12;
Figure 14A is enlarged view of the portion marked 14 in Figure 11C in one operational position;
Figure 14B is an enlarged view of the portion marked 26 shown in Figure 11C but in another operational position;
Figure 15 is a cross-sectional view through part of the mold part of Figure 2, with the injection mold open; and
Figure 16 is a cross-sectional view through part of the mold part of Figure 2 with the injection mold in an alternate configuration.

The drawings are not necessarily to scale and are may be illustrated by phantom lines, diagrammatic representations and fragmentary views. In certain instances, details that are not necessary for an understanding of the non-limiting embodiments or that render other details difficult to perceive may have been omitted.

### DETAILED DESCRIPTION OF EMBODIMENTS

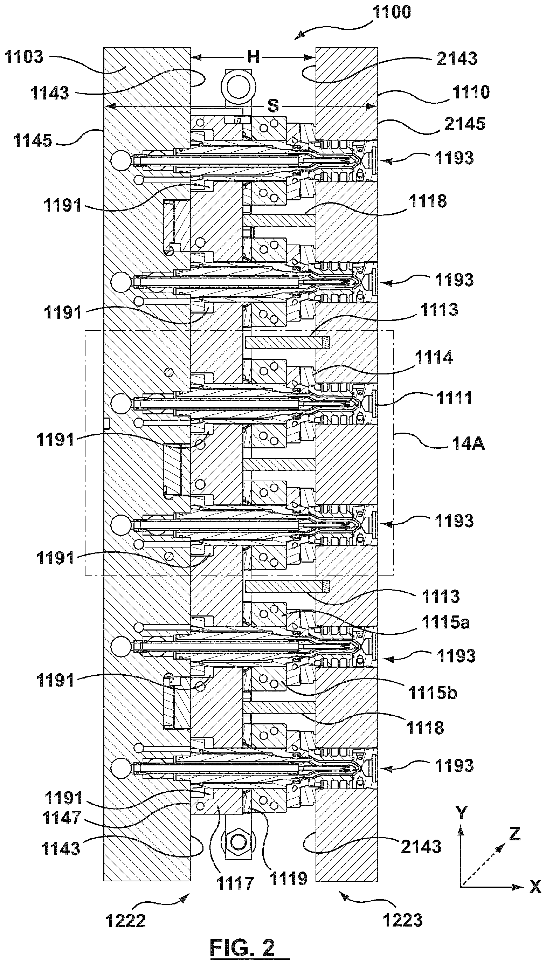

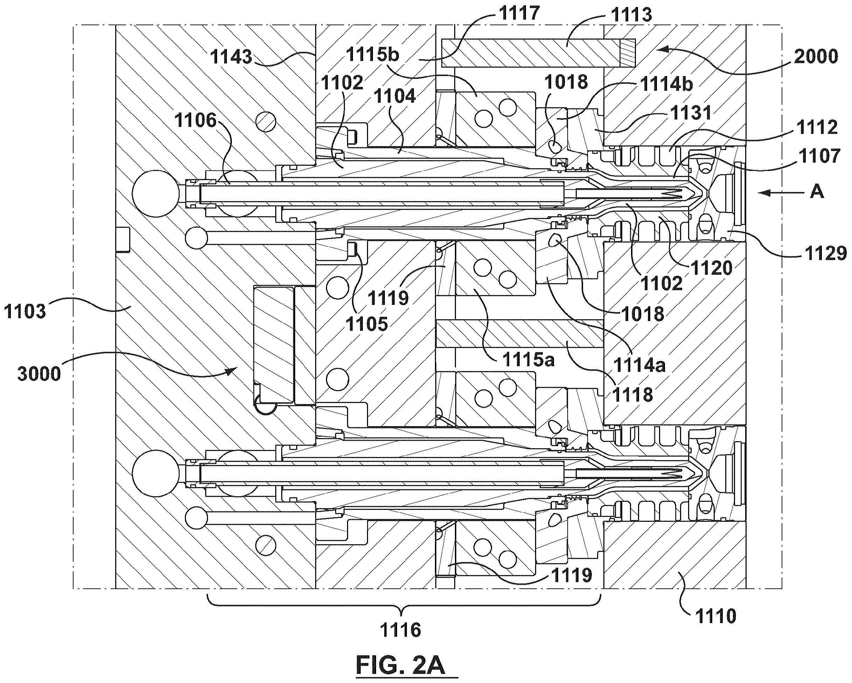

With reference to Figures 2 and 2A, another embodiment is illustrated which includes a distance augmenting structure for selectively controlling a shut height of a mold. Figure 2 is a cross-sectional view through an injection mold 1100 forming part of an injection mold machine (not shown). Figure 2A is an enlarged view of the portion marked 14A in Figure 2. As will be explained hereinafter, the configuration of mold 1100 can be adjusted such that it is configured in a first normal operating mode or in a second alternate operational mode. In the first operational mode, mold 1100 may be configured for performing a normal molding operation such as, for example, molding of molded articles (not shown). In the second operational mode, mold 1100 may be configured for performing a molding operation such as, for example, vent cleaning as will be more fully explained hereafter. Alternatively, the second mode may enable the injection mold 1100 to operate in another operational mode other than the normal operating mode or a vent cleaning mode.

Generally, mold 1100 may be part of an injection mold machine (not shown) and mold 1110 may include a first mold half generally designated 1222 and a second mold half generally designated 1223. First mold half 1222 may include a core plate 1103 and a stripper plate 1117, and second mold half 1223 may comprise a cavity plate 1110. The core plate 1103, stripper plate 1117, and cavity plate 1110 may all be appropriately supported on and movable relative to each other on a support frame (not shown) for normal operation of such a mold 1100, in any suitable manner as is well known in the art. A plurality of mold stacks 1111 may also be provided. The mold stacks 1111 may have components arranged in a stack configuration, including components installed in cavities 1191 which extend through the core plate 1103, stripper plate 1117 and wear plate 1119, and cavities 1193, which extend through the cavity plate 1110. All mold stacks 1111 in mold 1100 may be formed in an identical manner or in a substantially identical manner. Alternatively, in other embodiments more than one configuration of mold stack may be provided in the same mold.

It should be noted that while in many, if not most, operational molds like mold 1100 the orientation would be such that axis X would be oriented generally horizontally and longitudinally in space, axis Y horizontally and transversely in space, and axis Z vertically in space, these orientations are not necessary. Mutually orthogonal axes X, Y and Z may in other embodiments be arranged in other spatial orientations.

Figure 2 shows the mold 1100 in a standard operating configuration with the mold in a closed position ready for injection of molding material such as a plastic into the mold and thus into the plurality of mold stacks 1111 to make production preforms. In Figure 2, there is illustrated the distance (or height) H in a direction parallel to the X axis between the outward facing surface 1143 of core plate 1103 and the inward facing surface 2143 of the cavity plate 1110. In the injection molding industry, the distance S in a direction parallel to the X axis, as illustrated in Figure 2, between the rear surface 1145 of core plate 1103 and the forward facing front surface 2145 of cavity plate 1110 is typically referred to as the mold shut height. It will be appreciated that as the height H changes, there is a corresponding change in the mold shut height S. In the first standard operating mode the height H will have a value H1 whereas in a second operating mode the height H will have a value H2 that will be different, and typically greater, than value H1. Thus, when the mold 1100 alternates between configurations corresponding to the first operating mode and the second operating mode, the height H will vary between H1 and H2 and their will be a corresponding change in the shut height S from S1 to S2.

Continuing with reference to Figures 2 and 2A, each mold stack 1111 may include a mold core 1102 fitted into the core plate 1103 and retained therein by a lock ring 1104. Bolts 1105 may fixedly secure the lock ring 1104 to core plate 1103. The position of lock ring 1104 relative to core plate 1103 remains fixed in the configurations corresponding to the first and second operating modes. The mold core 1102 may contain a cooling tube 1106 for the transmission of cooling fluid from a source within the core plate 1103 to remove heat from the injected material in the mold cavity 1107 and solidify the molded part in the mold cavity 1107.

Each mold stack 1111 may also include a cavity insert 1120 and an adjacent gate insert 1129 that are retained in the cavity plate 1110 by a cavity flange 1131. Bolts (not shown) may secure the cavity flange 1131 to the cavity plate 1110. Thus, cavity flange 1131 can be fixed relative to cavity plate 1100 and so there will be no relative movement of the cavity plate 1110 and the cavity flange 1131 as the mold 1100 is alternated between configurations for the first and second operational modes referenced above. Cooling channels 1112 may circulate cooling fluid from a source through the cavity insert 1120 and gate insert 1129 to remove heat from the injected material.

The mold 1100 may also include one or more pairs of slide bars 1115a and 1115b that may be slidably supported on a wear plate 1119. Wear plate 1119 of mold 1100 may comprise a single integrally formed piece of material with apertures formed therein, or separate sections or segments, and provide support material for slide bars 1115a, 1115b between the slide bars and the stripper plate 1117. The wear plate 1119 may thus be mounted on the stripper plate 1117. The apertures in the wear plate 1119 may be configured to at receive at least part of regular tonnage blocks 1118 and adaptive tonnage blocks 1113 extending from cavity place 1110 so that they are able to bear directly against the outward facing surface of stripper plate 1117, rather than bear against the wear plate 1119.

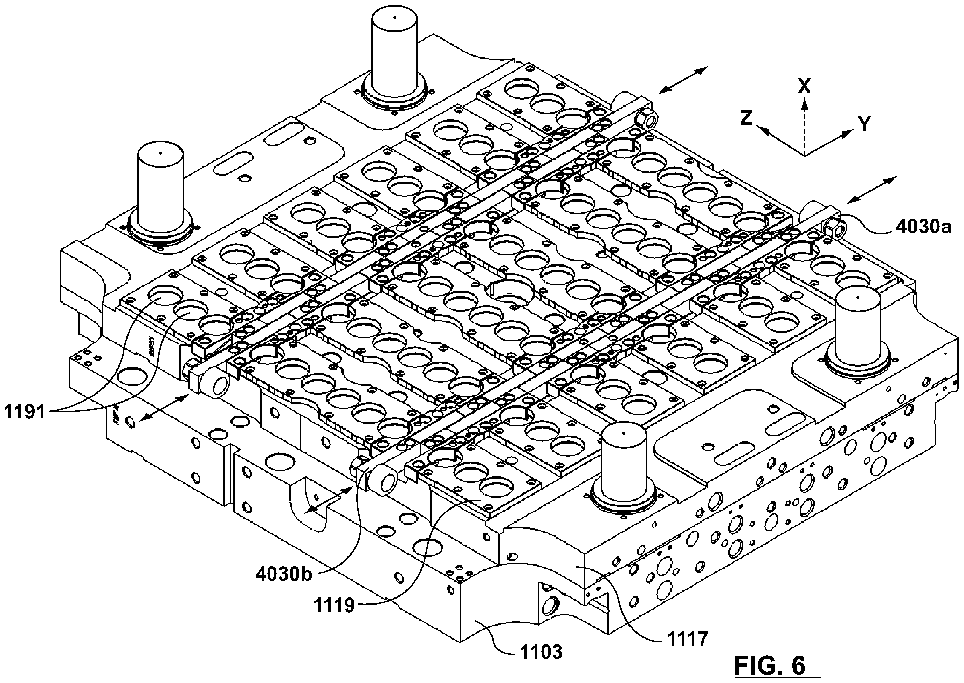

The slide bars 1115a, 1115b can be configured for carrying a pair of neck ring halves 1114a and 1114b forming a neck ring associated with each mold stack 1111. The multiple neck ring halves 1114a, 1114b may commonly be fixedly attached such as with bolts (not shown) to respective slide bars 1115a, 1115b. The neck ring halves 1114a, 1114b can slide with slide bars 1115a, 1115b respectively between an in-mold first position which corresponds to a "standard molding configuration" and an out-mold second position where the neck ring halves are withdrawn sufficiently to allow the ejection process to take place so that an injected preform can be removed from the mold cavity 1107. Neck ring halves 1114a, 1114b, can be assembled onto and connected to respective slide bars 1115a, 1115b and this assembly can be moved by connecting bars (such as connecting bars 4030a, 4030b as shown in Figure 6). Connecting bars can include a cam follower (such as rollers 4033 as shown in Figure 6). These cam followers can be inserted into a cam track defined in a cam (not shown). Any forward (ejection) movement of stripper plate assembly activates a connecting bar movement. Further details of an example of such an arrangement can be found in Applicant's US published patent application, publication no. US-2008/0241309-A1 for a Cam System For A Mold published October 2008, the entire subject matter of which is hereby incorporated herein by reference. However, also as known in the art, movement of slide bars 1115a, 1115b and their respective neck ring halves 1114a, 1114b can be effected by mechanisms other than a cam track and roller. By way of example only, in other embodiments, an assembly incorporating a linear actuator might be employed. In this regard, Applicant's patent published US published patent application no. US2007/0059395 published March 15, 2007, the entire contents of which is hereby incorporated herein by reference, discloses an example of such an alternative mechanism.

The neck ring halves 1114a, 1114b, like neck ring 300, also have at least one additional position and possibly more than one other position that may correspond with one or more other additional operational modes. For example, as illustrated, neck ring halves 1114a, 1114b may have a third position which corresponds to another operational mode such as a "vent cleaning mode" configuration in which the neck ring halves may have moved outwardly a relatively small distance. As will be explained hereinafter, in mold 1100, the height H between the cavity plate 1100 and the core plate 1103 (and thus the corresponding mold shut height S) can be adjusted to increase and decrease the height H and corresponding mold shut height and thereby enable the ring halves 1114a, 1114b to move between the standard mold operational configuration and a second operational configuration such as the vent cleaning mode configuration.

The wear plate 1119 is sacrificial material and reduces the wear on the stripper plate 1117 due to movement of the neck ring halves 1114a, 1114b by the slide bars 1115a, 1115b each time a molded part is released from the mold cavity 1107 and each time the slide bars and neck ring halves move between the first and second operational mode configurations. Cooling channels 1018 may be provided to circulate cooling fluid from a source through the neck ring halves 1114a and 1114b to remove heat from the injected material. Molten mold material may be conveyed to the mold cavity via a hot runner nozzle, hot runner manifold and hot runner stacks in a conventional manner known in the art.

It will be appreciated that when the plastic material is injected under pressure into the mold cavity 1107, outward pressure will be exerted upon the neck ring halves 1114a, 1114b. To resist this force associated with the injected plastic, a clamping (compressive) force A may be applied to the mold stack 1111 to retain the mold stack 1111 in an appropriate operational configuration, either during standard molding operation or during an alternate operation such as vent cleaning. It will be appreciated that applying a compressive load A causes reaction forces throughout the mold stack 1111. Thus, due to the inclined mating surfaces between cavity flange 1131 and neck ring halves 1114a, 1114b, a compressive force will act on neck ring halves 1114a, 1114b along the longitudinal (X) and transverse (Y) axes, urging the neck ring halves 1114a, 1114b, transversely inwards. In this way, by application of a suitable compression force, the relative positions of the neck ring halves 1114a, 1114b can be held at either the desired standard molding configuration or the vent cleaning configuration, which can be determined by the selection of the appropriate mold shut height S.

With the application of clamping force A to the mold stack 1111, little if any of this load will typically be carried through the slide bars 1115a, 1115b or wear plate 1119 or stripper plate 1117. In the normal operating configuration, additional load may be provided to compress the core plate 1103 and the cavity plate 1110 together and load may be transmitted also from the cavity plate 1110, through regular tonnage blocks 1118 (Figure 2 and 2A) into the stripper plate 1117 and to the core plate 1103. In a second operational configuration, such as a vent cleaning mode, the stack 1111 may be in an "open" configuration with substantially no compressive load being transmitted through the stack 1111. A compressive load may however still be provided to compress the core plate and the cavity plate together and may be transmitted also from the cavity plate 1110, through adaptive tonnage blocks 1113 (Figure 2 and 2A) into the stripper plate 1117 and to the core plate 1103 as will be described further below.

When the mold 1100 is in the standard operating configuration, the clamping force A being applied to the stack may be greater than the minimum load which would be required to resist injection pressure and hold the mold stack components in position. Additional compressive loading provides safety in case of processing or melt quality fluctuations which would result in preform flash during normal operation. Thus, the conventional or regular tonnage blocks 1118 may bear additional load in co-operation with cavity plate 1110, stripper plate 1117 and core plate 1103. The height of the regular tonnage blocks can be selected to provide an appropriate / desired distance between the cavity plate 1110 and the stripper plate 1117. Thus, in most normal operating configurations, the tonnage blocks 1118 are positioned between and space the cavity plate 1110 and stripper plate 1117, and thus provide a height H and shut height S of distances required for the standard operational configuration for producing performs. As noted above, regular tonnage blocks 1118 are received in apertures in the wear plate 1119, so that load borne by the regular tonnage blocks 1118 is transferred to the stripper plate 1117. It would only be in an exceptional situation where a wear plate 1119 would be used to transmit compressive loads between the cavity plate and the core plate with the tonnage blocks engaging the wear plate.

As will be described further below, adaptive tonnage blocks 1113 may also be provided and the position of the engaging surface of the adaptive tonnage blocks can be selected to provide an increased distance between the cavity plate 1110 and the stripper plate 1117 providing a height H (and corresponding shut height S) of a distance required for the alternate operational configuration.

Mold 1100 may be provided with a mold shut height adjustment apparatus that may comprise one or more distance augmenting structures. In particular, the mold shut height adjustment apparatus may comprise one or more of three separate mechanisms to cause an adjustment of the height H (and thus also an adjustment of the mold shut height S) and/or an adjustment of the configuration of the neck ring halves between the standard molding configuration and a second operational mode configuration such as the vent cleaning configuration. The mold shut height adjustment mechanisms may be integrated and at least partially embedded within one or both of the mold halves 1222, 1223. Three such mechanisms can be characterized as: (1) a cavity plate adjustment mechanism 2000; (2) a neck ring adjustment mechanism 4000; and (3) a core plate adjustment mechanism 3000. Of these, the cavity plate adjustment mechanism 2000 and core plate adjustment mechanism 3000 may cause an adjustment of mold shut height, and this may indirectly during operation result in an adjustment of the configuration of the neck ring halves 1114a, 1114b.

With respect to core plate adjustment mechanism 3000, its function is to adjust the distance between core plate 1103 and stripper plate 1117. By increasing the space between the core plate 1103 and stripper plate 1117, the position of lock ring 1104 relative to neck ring halves 1114a, 1114b can be adjusted. Specifically, the neck ring halves 1114a, 1114b can move longitudinally away from lock ring 1104. As will be described later, a corresponding adjustment of a distance between cavity plate 1110 relative to stripper plate 1117 can allow cavity flange 1131 to move (longitudinally) relative to the inclined surface of the neck ring halves 1114a, 1114b. This movement can be facilitated by cavity plate adjustment mechanism 2000, to allow neck ring halves 1114a, 1114b to move outwardly from the standard molding configuration to a vent cleaning configuration as described above.

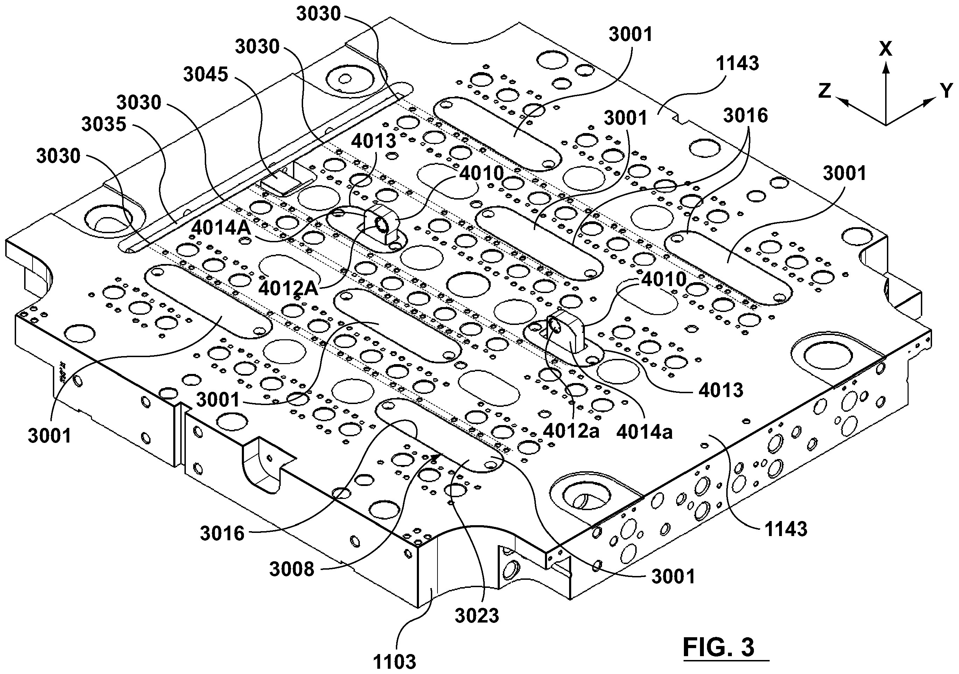

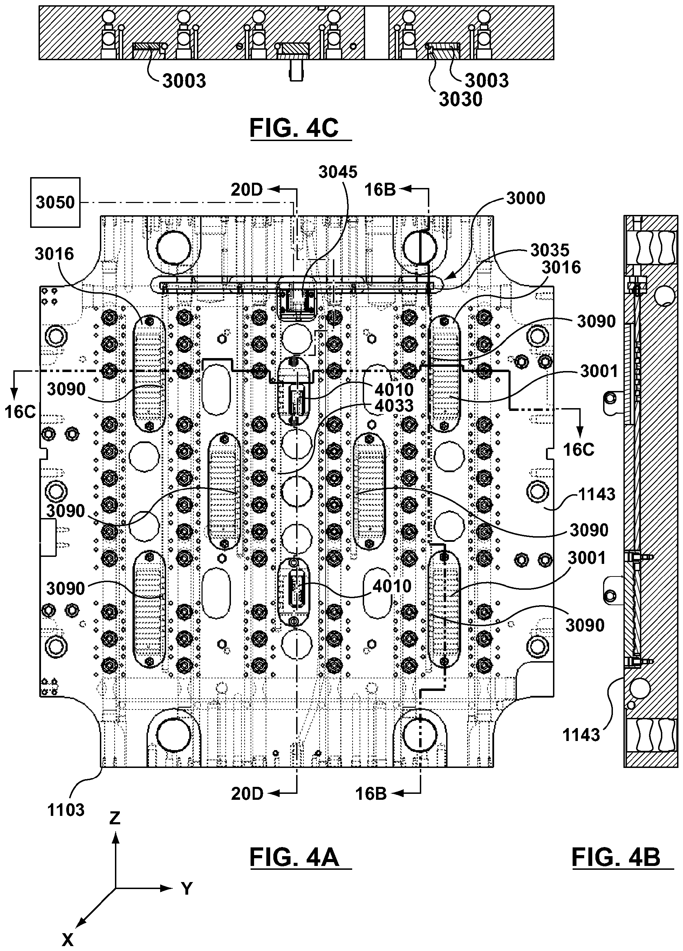

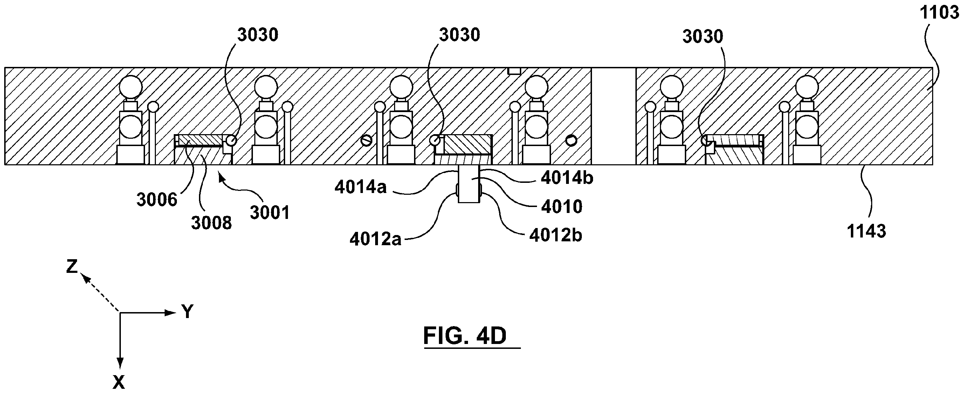

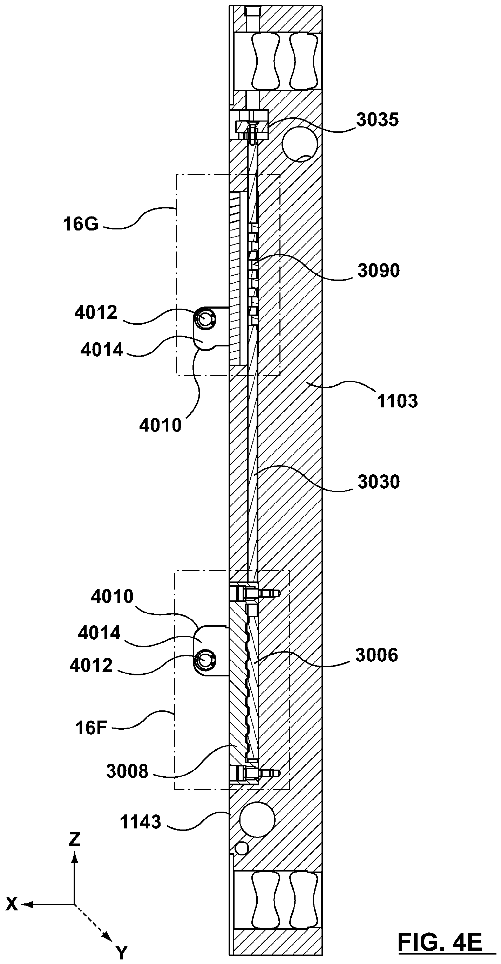

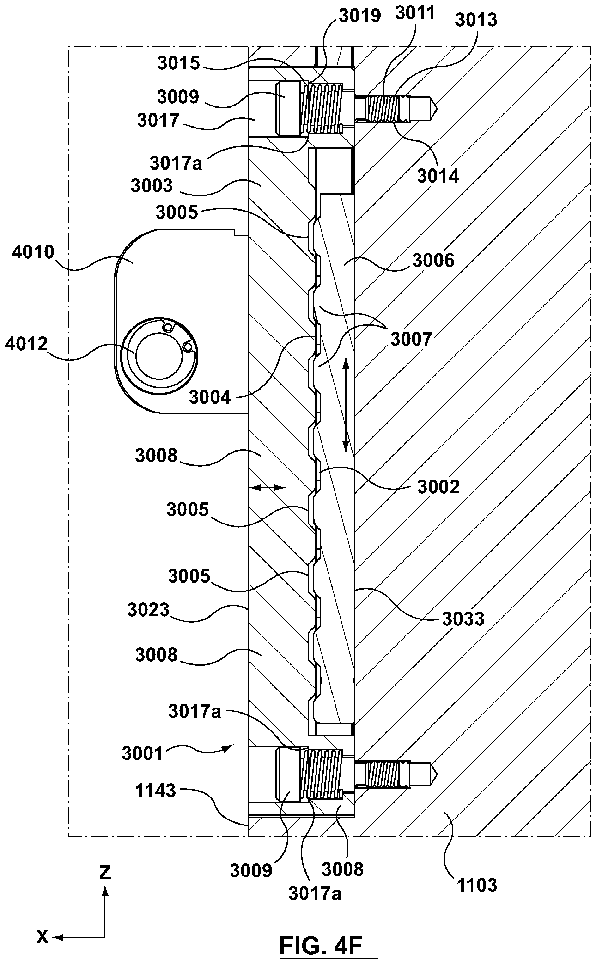

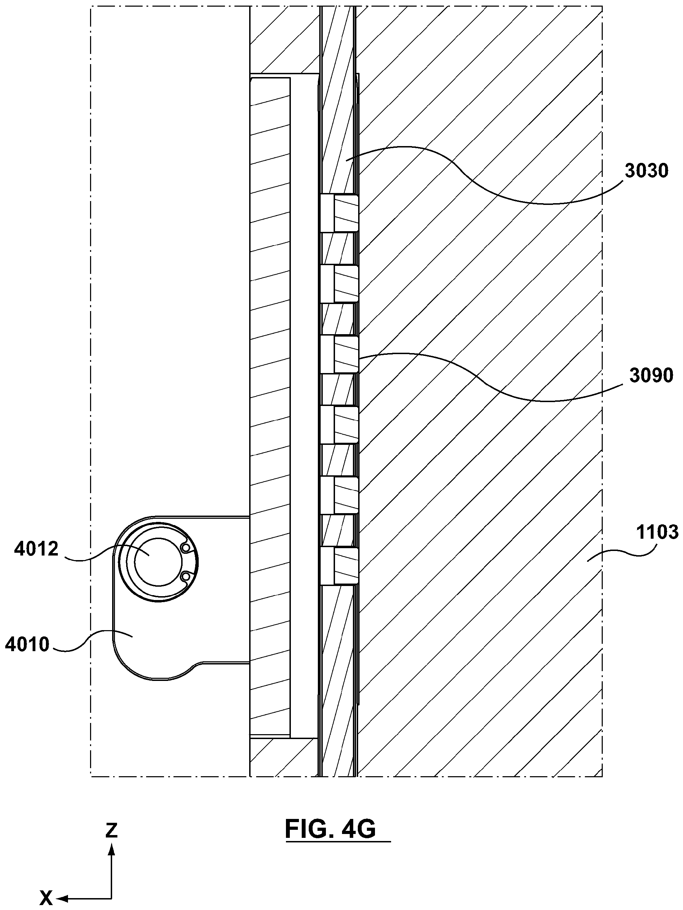

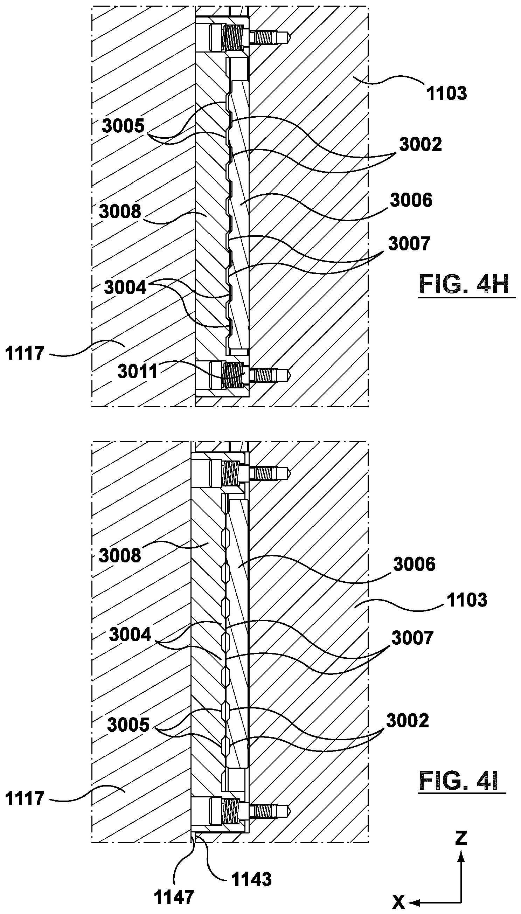

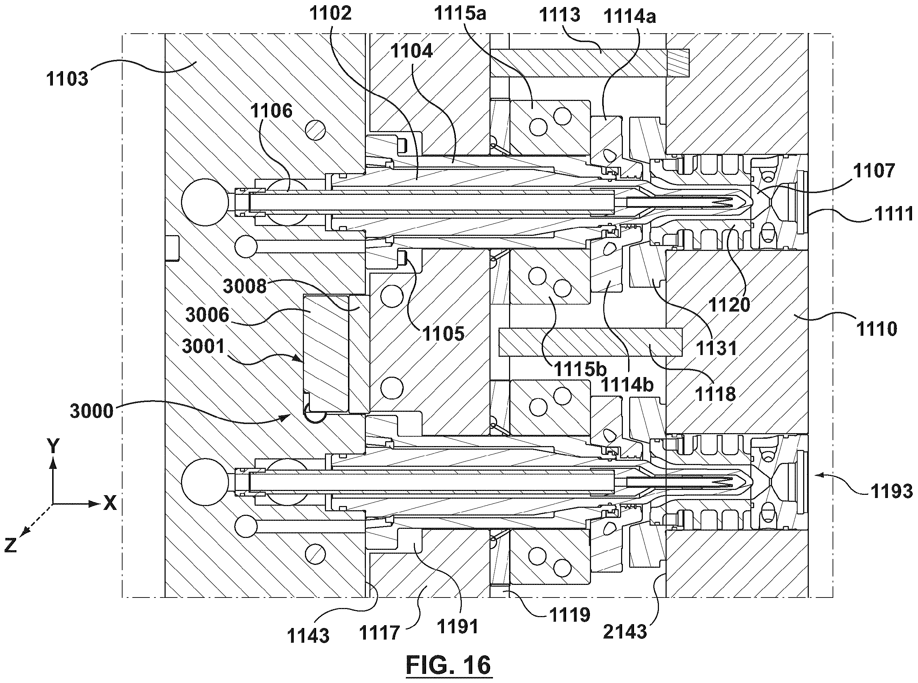

With particular reference to Figures 3, 4 and 4A to 4I, core plate adjustment mechanism 3000 comprises a plurality of core plate adjustment devices 3001 that may be referred to herein as back up pads. The back up pads 3001 may be received in recesses or apertures 3016 defined in the core plate 1103. As is best shown in Figure 16, and as will be more fully described hereinafter, in an alternate operational configuration, the back up pads 3001 may be extended to space stripper plate 1117 apart from core plate 1103. Accordingly, the plurality of back up pads 3001 may be spaced in appropriate locations about core plate 1103 to provide for a proper or appropriate loading distribution between the core plate and stripper plate 1117 when the back up pads 3001 are engaged to provide a separation of the core plate 1103 from the stripper plate 1117 (the stripper plate not being shown in Figure 3 and Figures 4A-4G).

As is best shown in Figures 3 and 4F, each back up pad 3001 may integrated within and be partially embedded in core plate 1103. Each back up pad 3001 may include an engagement portion 3008 having an engagement surface 3023. Engagement portion 3008 is moveable in a direction parallel to axis X from a first, retracted position where the engagement surface 3023 is generally flush with, or reset behind, the surface 1143 of the core plate 1103 to a second, extended position where the engagement surface 3023 extends past surface 1143 of core plate 1103. When the engagement surface 3023 is at the first (retracted) position generally flush with, or reset behind, surface 1143 of the core plate 1103, the mold 1100 may be in its standard mold operating configuration. When the engagement surface is in its second (extended) position, the injection mold 1100 may be in an alternate operational configuration such as a vent cleaning configuration.

With particular reference to Figures 4E and 4F, in addition to engagement portions 3008, each back up pad 3001 may have a driving portion 3006 which is moveable with a sliding motion between first and second positions. Driving portion 3006 may have a flat surface 3033 which rests against an adjacent surface of the core plate 1103 in the aperture 3016 in the core plate. Thus, a load on the driving portion 3006 acting in the direction parallel to axis X towards the core plate 1103 can be transmitted to the core plate 1103. In a first position (shown in Figures 4F and 4H) the driving portion 3006 is in a first position where protrusions 3007 on its surface are received in corresponding recesses 3005 on the surface of the engagement portion 3008.

Similarly, in such a first position, protrusions 3004 on the engagement portion may be received by corresponding recesses 3002 on driving portion 3006. Driving portion 3006 may be moved from the position (shown in Figures 4F and 4H) in a direction parallel to axis Z to a second position (as shown in Figure 4I) where protrusions 3007 on the surface of driving portion 3006 push and cam against the protrusions 3004 on the surface of the engagement portion 3008 and move to a position where the protrusions 3007 are generally aligned with protrusions 3004 in the Z direction. This has the effect of causing the engagement portions 3008 of back up pads 3001 to move away from core plate 1103 in a direction parallel to the X axis. In this position a space can be created between the adjacent surface 1143 of core plate 1103 and the adjacent surface 1147 of stripper plate 1117. The engagement portion 3008 and the driving portion 3006 of each back up pad device 3001 may be made from any suitable material such as by way of example stainless steel.

The movement of engagement portion 3008 is limited to the aforementioned sliding movement parallel to the X axis. This limited movement may be accomplished in many ways. For example, as is best shown in Figure 4F, a pair of spaced bolts 3011 may be provided proximate opposed ends of the driving portion 3006, the bolts having shafts that are generally axially aligned with axis X. The shafts of bolts 3011 may have bottom threaded end portions 3014 that are received in corresponding threaded apertures 3013 in the core plate 1103. Shafts of bolts 3011 may also have upper portions that at their upper end are integrally connected with bolt heads 3009. Each bolt 3011 may be received in a generally cylindrical pad aperture 3017 that passes entirely through engagement portion 3008. The movement within the pad apertures 3017 will be guided by the contact with the outer side surfaces of the bolt heads. Each pad aperture 3017 may have a shoulder portion 3017a. Between the bottom surface of bolt 3011 and the upper surface of shoulder portion 3017a is a gap 3015. It will be appreciated that the engagement portion 3008 of back up pad 3003 may move in a direction parallel to axis X as the bolt heads 3009 move within their respective apertures 3017 between an extended outward position where the shoulders 3017a abuts the lower surfaces of the bolt heads 3009, and an inward retracted position where the protrusions 3004 of the engagement portion 3008 are transversely aligned and in abutment with the recesses 3002 of the driving portion 3006 (i.e. the engagement portion 3008 is fully retracted).

Optionally, the engagement portion 3008 may be force biased to the retracted position by a biasing mechanism. For example, the driving portion 3008 may biased to the retracted position by a spring mechanism. The spring mechanism may include a coil spring 3018 retained under compression between each one of bolt heads 3009 and the upper surface of the corresponding shoulder portion 3017a as shown in Figure 4F.

With particular reference now to Figures 4A, 4E and 4G, it can be observed that to cause driving portion 3006 to be driven in reciprocating movement in a direction parallel to axis Z, driving portion 3006 may be secured to a connecting rod 3030 that generally runs in a direction parallel to axis Z. Connecting rod 3030 may be attached to driving portion 3006 by, for example, a series of interlocking teeth 3090 (Figure 4E) on both the driving portion and connecting rod. However, other suitable attachment modes will be apparent to skilled persons, such as by way of example only welding or bolts. Connecting rods 3030 may be made from any suitable material, such as by way of example only heat-treated steel. A single rod 3030 may be attached to driving portions 3006 of one or more back up pad devices 3001. For example, the rod 3030 depicted in the cross sectional view of Figure 4B and 4E is attached to two driving portions 3006 of separate and aligned back up pad devices 3001.

With particular reference again to Figure 4A, a plurality of connecting rods 3030 may be provided so that the driving portion 3006 of each back up pad device 3001 in the core plate 1103 may be connected to at least one connecting rod 3030. The plurality of connecting rods 3030, which all may extend and be aligned in a direction parallel to axis Z, may be themselves be all interconnected by any known and suitable attachment mechanism such as for example bolting, welding etc. to a common actuator cross bar 3035 that may be made from any suitable material such as by way of example only stainless steel. Actuator cross bar 3035 may be oriented in a direction generally orthogonal to the connecting rods and extend generally in a direction parallel to axis Y. Connecting rods 3030 may in some embodiments such as is illustrated in Figures 3 - 4G, be housed and moveable within enclosed channels that extend within the body of the core plate 1103, and thus will be generally not be visible when looking at the core plate such as in the view shown in Figure 3. Thus connecting rods 3030 and actuating bar 3035 may together constitute a connection mechanism to connect the driving portion 3006 with an actuator. In other embodiments, the connecting rods 3030 may be housed and moveable within open channels where the channels are formed as longitudinally extending grooves defined in the core plate 1103 at the outward facing surface 1143 of core plate 1103

Actuator cross bar 3035 may in turn be secured in a suitable manner to an actuating device 3045 (Figure 4A) such as a drive shaft of a servo motor or a pneumatic piston.
The actuating device 3045 may be operated under the control of a controller 3050, such as, for example, a programmable logic controller (PLC) or industrial computer. Actuating device 3045 may thus have a communication link to the controller 3050 which may be wired or wireless. Actuating device 3045 may be mounted within the core plate with screws connecting it to the core plate. Actuating device 3045 may have an actuating shaft (not shown) operable for intermittent, controlled, reciprocating movement back and forth in directions that are generally parallel to axis Z. Thus actuating device 3045 and its reciprocating shaft is interconnected to actuator cross bar 3035, which in turn is connected to each of the connecting rods 3030. The connecting rods 3030 are in turn are interconnected to driving portions 3006 of back up pad devices 3001. Thus, cyclical, intermittent backward and forward movement of the actuating shaft of the actuating device 3045 can result in synchronized movement of each driving portions 3006 of all back up pad devices in a direction parallel to axis Z, and thus the synchronized extension of all engagement portions 3008 in the direction parallel to axis X. By way of example only, actuator shaft of actuating device 3045 may be moved about 10mm in a direction parallel to axis Z, resulting in a corresponding movement parallel to the Z axis of the connecting rods 3030 and the driving portions 3006 of the back up pad devices 3001. The engagement of driving portions 3006 with engagement portions 3008 may translate into 0.5mm movement of the engagement portions 3008 in a direction parallel to axis X to result in a 0.5mm separation between the adjacent surfaces of the core plate 1103 and the stripper plate 1117.

It will be appreciated that this movement of the engagement portions 3008 of back up pad devices 3001 will typically be carried out when the mold stack 1111 is not under a clamping force A and when most if not all compressive forces acting on the core plate 1103 and stripper plate 1117 have been removed, allowing the stripper plate 1117 to be displaced in a direction parallel to the X-axis. For example, movement of engagement portions 3008 may typically be effected with the mold 1100 fully open for ejection of performs or other parts. Once the extended position of the engagement portions 3008 has been reached, however, the engagement portions 3008 will be able to maintain their extended position once the compressive loads are reapplied, during operation in the second mode such as vent cleaning, and load will be transmitted through the driving portions 3006 to the core plate 1103.

It will be appreciated that other alternate mechanisms may be provided to effect movement of the engagement portion 3008 of each back up pad device 3001 between the retracted and extended positions.

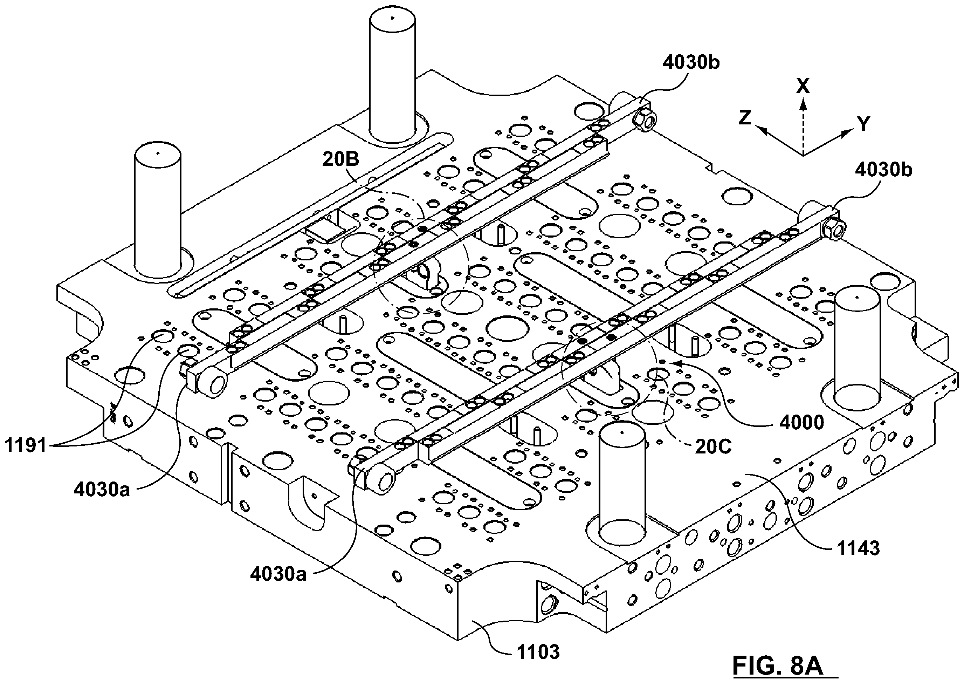

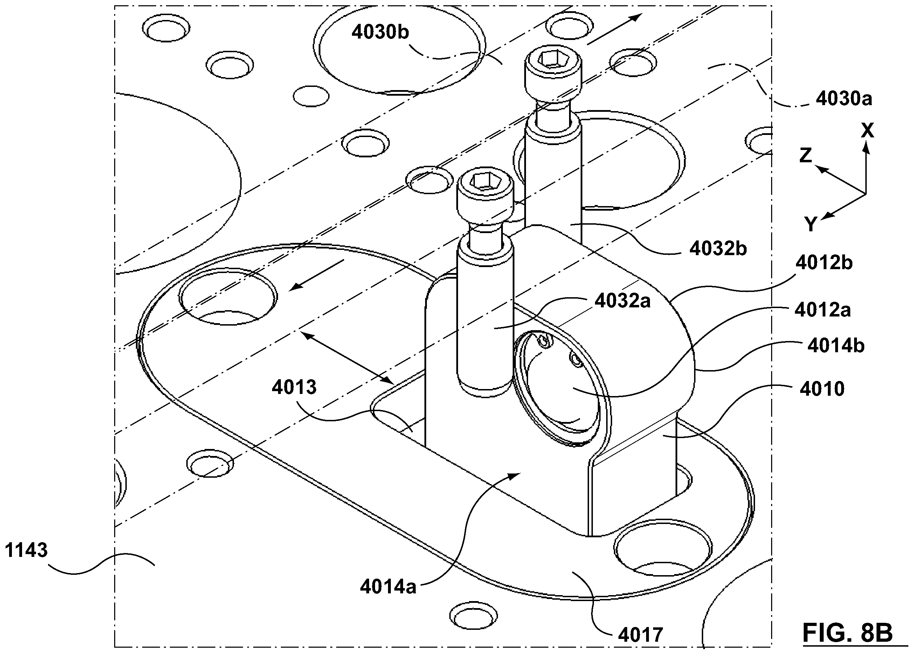

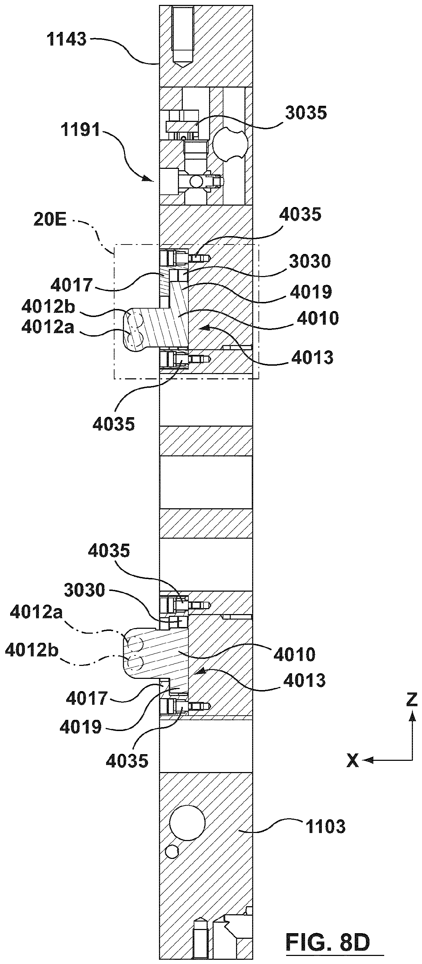

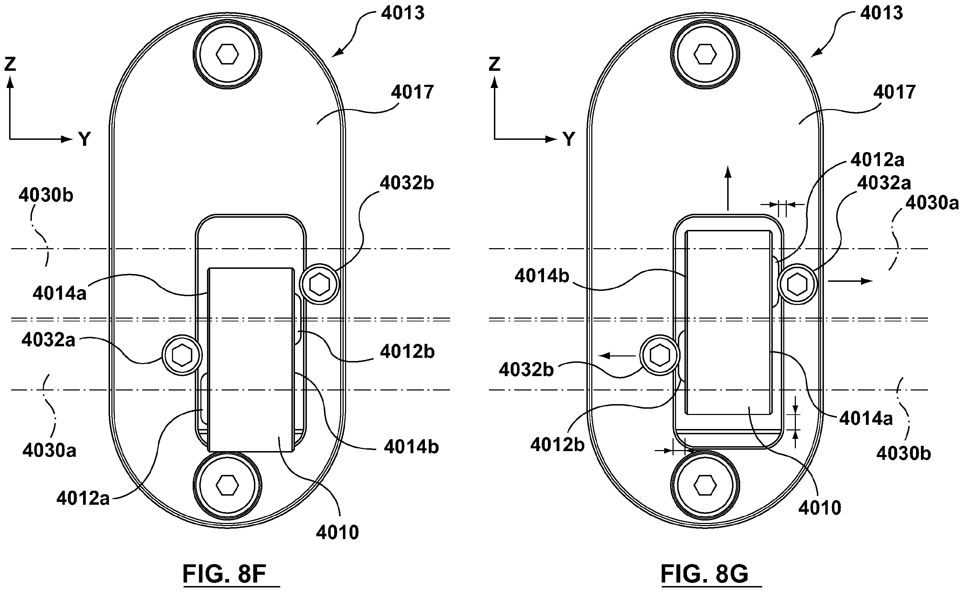

In the embodiment of Figures 3 and 4A-4G, some parts of neck ring adjustment mechanism 4000 are also shown. In particular, a pair of spaced, generally L-shaped, actuating blocks 4010 are integrated with and at least partially embedded and received within apertures 4013 in the outer surface 1143 of core plate 1103 (see also Figures 8A-G). Each actuating block 4010 has opposed engagement faces 4014a, 4014b. Each engagement face 4014a, 4014b, may contain a spring-loaded thrust pad device 4012a, 4012b that may be in the form of a thrust pad have a generally semi-spherical surface for engaging one of a dowel or other member 4032a, 4032b (Figures 8B-8C; the position of thrust pads 4012a, 4012b is also shown in broken line in Figure 8D), on a slide bar connecting bar 4030a, 4030b as will be explained further hereafter. Thrust pad portions 4012a, 4012b may be resiliently displaceable in directions parallel to axis Y relative to the remaining parts of block 4013. For example the thrust pad portions 4012a, 4012b, may be received in opposed channels in block 4013 and be spring loaded providing a spring force created by a spring (not shown) that on each thrust pad portion, tends to exert an outwardly directed force. The thrust pad portions 4012A, 4012B may be held in the channel by a retaining ring (not shown)

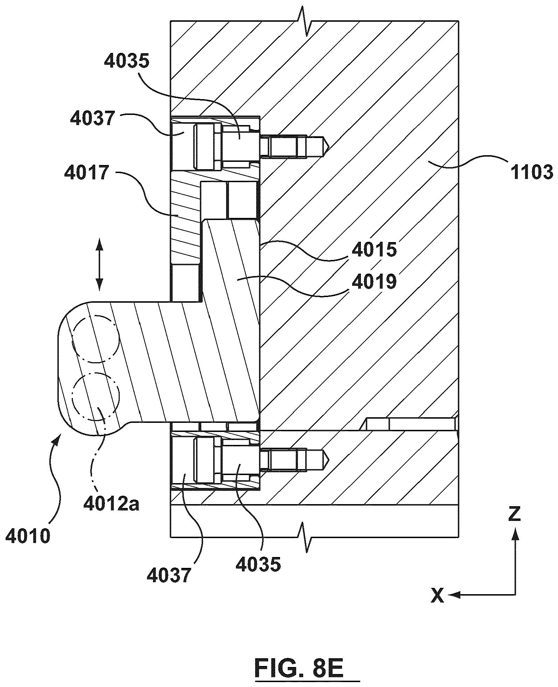

Each actuating block 4010 is adapted to be able to slide in back and forth in directions parallel to axis Z within the core plate aperture 4013. Each actuating block 4010 may be supported for such sliding movement within the aperture 4013 by having a base leg 4019 of the actuating block supported upon a base 4015 surface within the aperture 4013. The aperture 4013 may also be provided with a cover 4017 (Figures 8B-8C) which can be releasably attached to the core plate 1103 with bolts 4035 (Figure 8E) that may be received in threaded apertures 4037 in core plate 1103. The base leg 4019 of the actuating block 4010 may thus move in sliding movement in the channel provided by aperture 4013 and top cover 4017

Each actuating block 4010 may be also secured to one of the connecting rods 3030. Actuating blocks 4010 may be attached to the same connecting rods that are also connected to driving portions 3006 of back up pad devices 3001. The connection of the actuating blocks 4010 to the connecting rods can be effected in the same way as driving portions 3006 of back up pads 3001, for example, using interlocking teeth, or in any other suitable manner such as for example welding or bolting. Alternatively, a separate driving mechanism, such as for example including separate connecting rods, may be provided for actuating blocks 4010. Thus, actuating blocks 4010 may also be moved in reciprocating, intermittent movement in directions parallel to axis Z. This movement can cause the thrust pad devices 4012a, 4012b to engage with respective dowels 4032a, 4032b depending from slide bar connecting bars 4030a, 4030b respectively, causing a cam effect that translates into driving the slide bar connecting bars 4030a, 4030b respectively to move in opposite outward directions parallel to axis Y Similarly, a movement in an opposite direction can cause thrust pad devices 4012a, 4012b, to disengage from respective dowels 4032a, 4032b allowing the slide bars to move in opposite inward directions parallel to axis Y. When the thrust pad devices 4012a, 4012b disengage, the slide bar connecting bars 4030a, 4030b move in the opposite direction and can return to their standard operational configuration. Because in such configuration, the stack will be closed, the tapered surface on the neck ring halves 1114a, 1114b, engaged with the opposed tapered surface on lock ring or cavity flange can create a force to drive the slide bar connecting bars 4030a, 4030b in the opposite direction. The restoring force results from the clamping force applied to the stack and onto the neck ring halves 1114a, 1114b and thus the slide bars 1115a, 1115b.

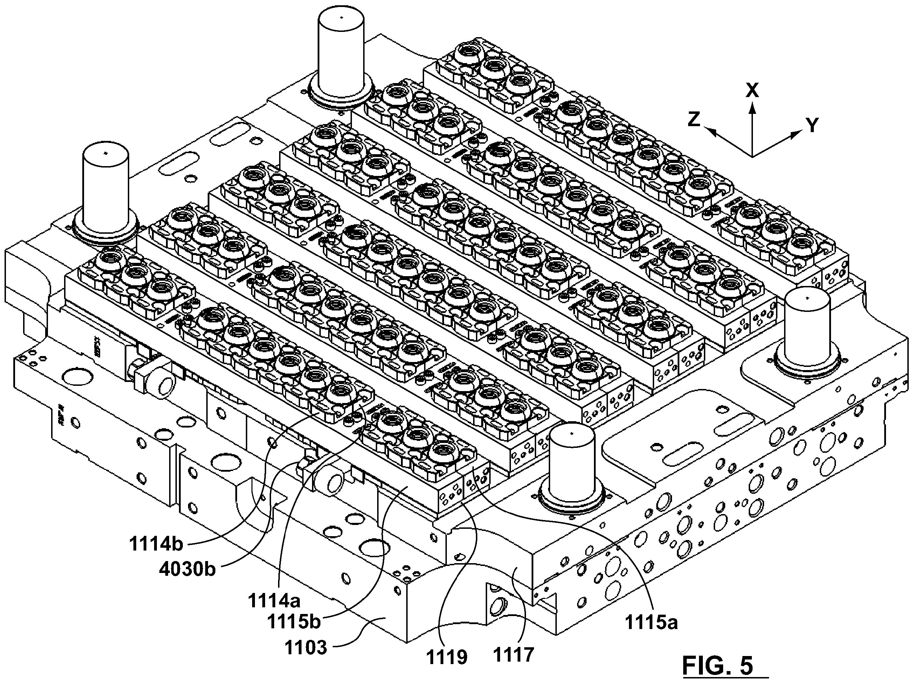

Turning now to Figures 5, 6, 7, and 8A, various perspective views are shown of different sub-assemblies comprising components of mold 1100, with each of these views showing a different number of components than the other views. In Figure 5, core plate 1103 is shown with stripper plate 1117 mounted above it, and wear plate 1119 mounted above the stripper plate. The sliding bar connecting bars 4030a, 4030b are received in channels formed through stripper plate 1117 and wear plate 1119 (see in particular Figures 3 and 4). These channels are oriented in a direction generally parallel to axis Y. The slide bar connecting bars 4030a, 4030b can each be joined to one of slide bars 1115a, 1115b such as with bolts (not shown). Each of the plurality of neck ring halves 1114a, 1114b is mounted to one of slide bars 1115a, 1115b. It will be appreciated that the plurality of neck ring halves 1114a, will move with slide bar 1115a in reciprocating movements in a direction parallel with axis Y. Similarly, the plurality of neck ring halves 1114b, will move with slide bar 1115b in opposite reciprocating movements but still in directions parallel with axis Y. Thus the neck ring halves 1114a, 1114b may be moved towards each other or away from each other, as required by the particular mode in which the injection mold 1100 is operating.

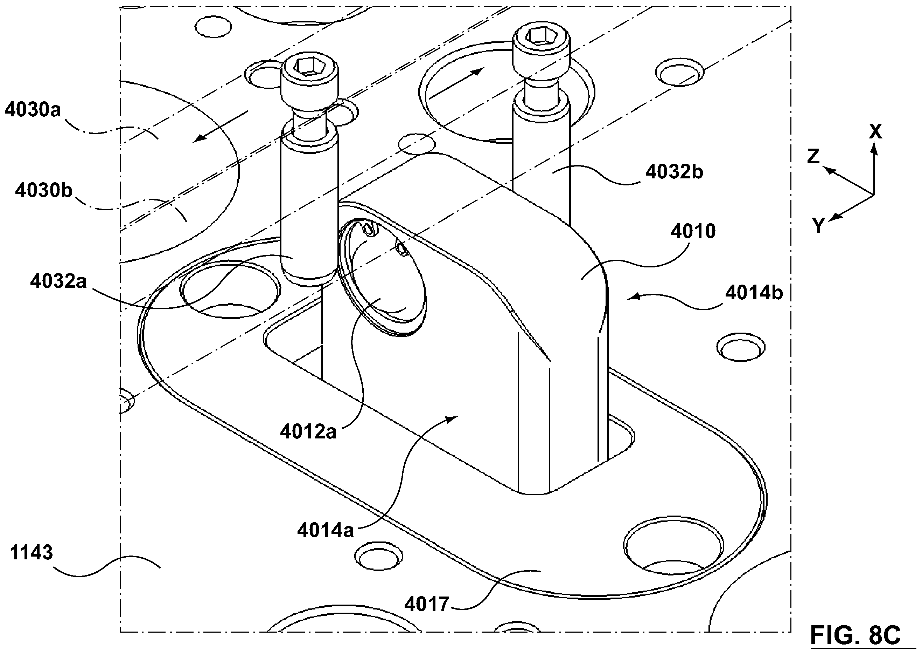

With particular reference now to Figures 8A, 8B and 8C, neck ring adjustment mechanism 4000 may be operated as follows. Each actuating block 4010 being secured to one of the connecting rods 3030 may be moved by the actuator bar 3035 connected to actuating device 3045 (see Figure 4A), in reciprocating, intermittent movement in directions parallel to axis Z. This movement (which will move in synchronized operation with core plate adjustment mechanism 3000) can cause the thrust pad devices 4012a, 4012b to engage with the respective dowels 4032a, 4032b on slide bar connecting bars 4030a, 4030b respectively, causing a cam effect that translates into driving the slide bar connecting bars 4030a, 4030b respectively to move in opposite outward directions, but in directions parallel to axis Y. With particular reference now to Figures 5 and 6, when connecting bars 4030a are moved in an outward direction parallel to axis Y, this will move slide bars 1115a, and the neck ring halves 1114a attached thereto, in the same direction. Similarly when connecting bars 4030b are moved in an outward direction parallel to axis Y, but opposite to connecting bars 4030a, this will move slide bars 1115b, and the neck ring halves 1114b attached thereto, in the opposite direction to neck ring halves 1114a, and slide bars 1115b. Thus, neck ring halves 1114a, 1114b can be moved outwards away from each other to a position where they are configured for operation of the injection mold 1100 in the alterative operational mode such as the vent cleaning mode configuration. This movement will occur in synchronization with the separation of stripper plate 1117 from core plate 1103 by core plate adjustment mechanism 3000 as described above and as particularly illustrated in Figures 4H and 4I. Thus, actuating device 3045 under control of controller 3050 can serve as the actuating driver for both core plate adjustment mechanism 3000 and neck ring adjustment mechanism 4000. Neck ring adjustment mechanism 4000 can be suitably configured to work co-operatively with the core plate adjustment mechanism 3000 as described above.

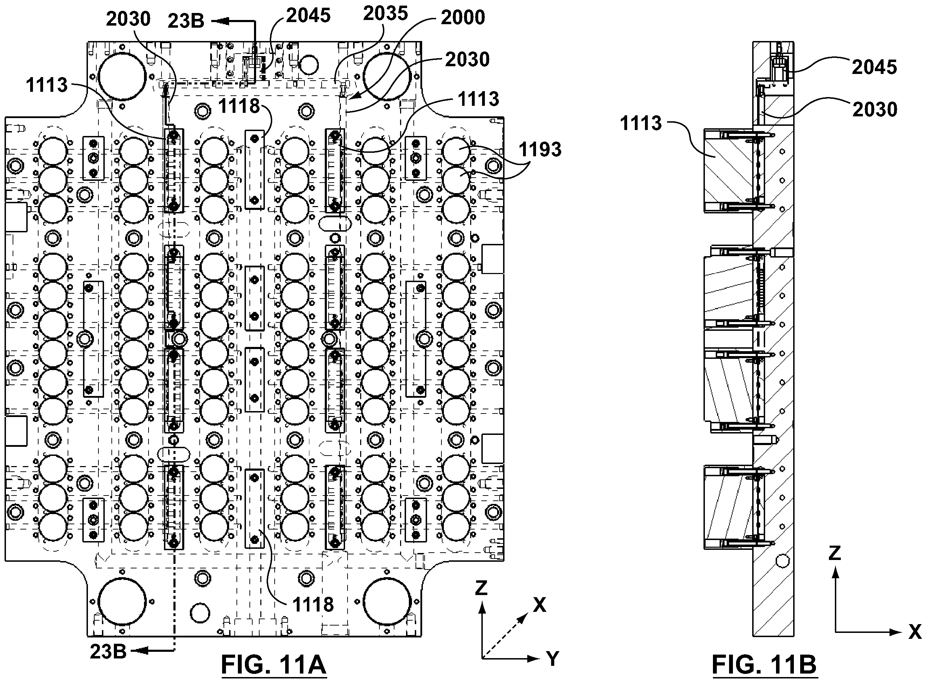

Turning now to cavity plate adjustment mechanism 2000 (Figure 11A), its purpose is to adjust the spacing between the cavity plate 1110 and the stripper plate 1117 and thus can also modify the height H and corresponding mold shut height S. This will allow for adjustment in the distance in the X direction between the cavity flange 1131 relative to the neck ring halves 1114a, 1114b.

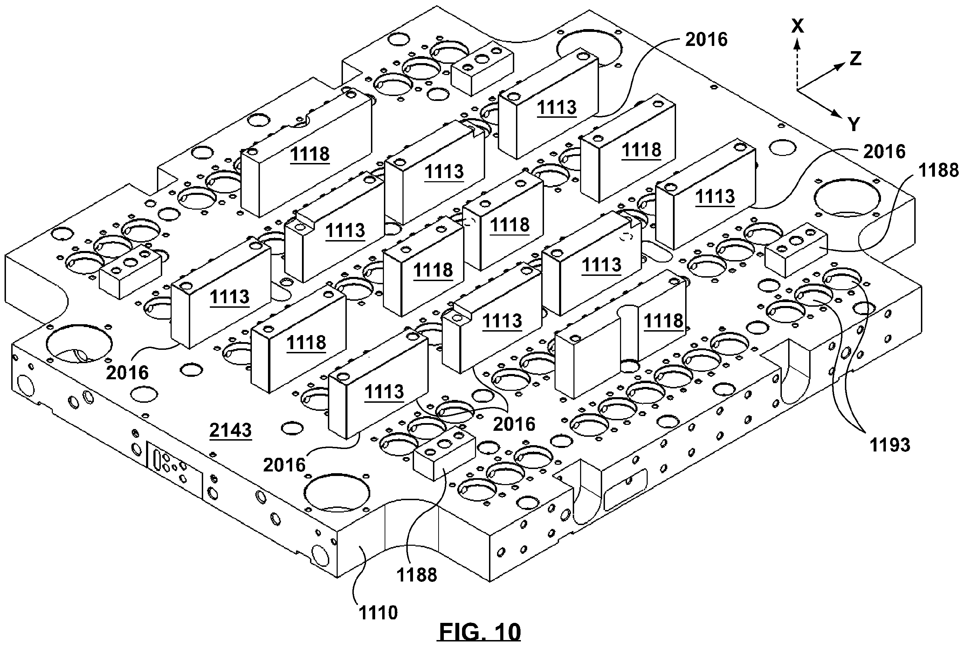

With particular reference to Figures 10, 11A-C, 12 and 13 cavity plate adjustment mechanism 2000 may comprise a plurality of cavity plate adjustment devices 2001 that may be referred to herein as adaptive tonnage blocks 1113. The adaptive tonnage blocks 1113 may be integrated with and at least partially embedded within cavity plate 1110. In this embodiment adaptive tonnage blocks 1113 are arranged in two rows, each row having four aligned adaptive tonnage blocks 1113. The plurality of adaptive tonnage blocks 1113 may be spaced in any appropriate locations about cavity plate 1110 to provide for a proper loading distribution on the cavity plate 1110 and stripper plate 1117 when the adaptive tonnage blocks 1113 are engaged to provide an additional distance separation of the cavity plate 1110 from the wear plate 1119.

In addition to the adaptive tonnage blocks 1113, regular tonnage blocks 1118 as referenced above, may also be provided as shown in Figures 10 and 11A. Additionally, four reflex tonnage blocks 1188 (also referred to as a regulating tonnage structures) may optionally be provided, with one reflex tonnage block being positioned at each one of the four corners of the cavity plate 1110. Applicant's own US patent no. 8,348,657 issued January 8, 2013 discloses examples of such structures that may be employed.

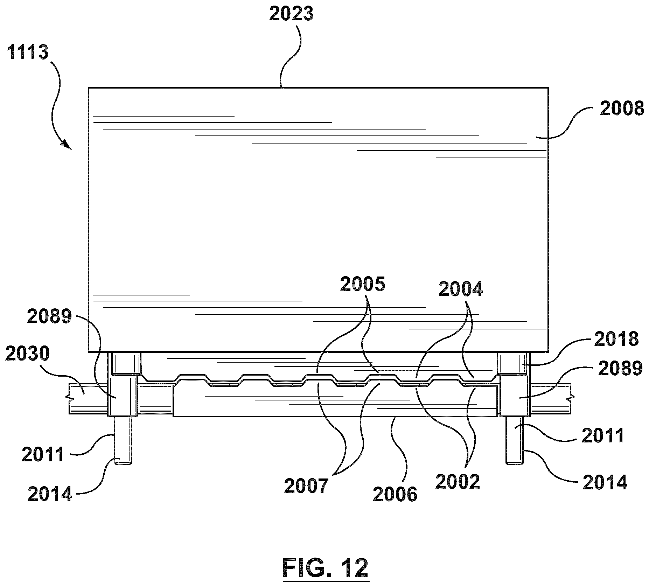

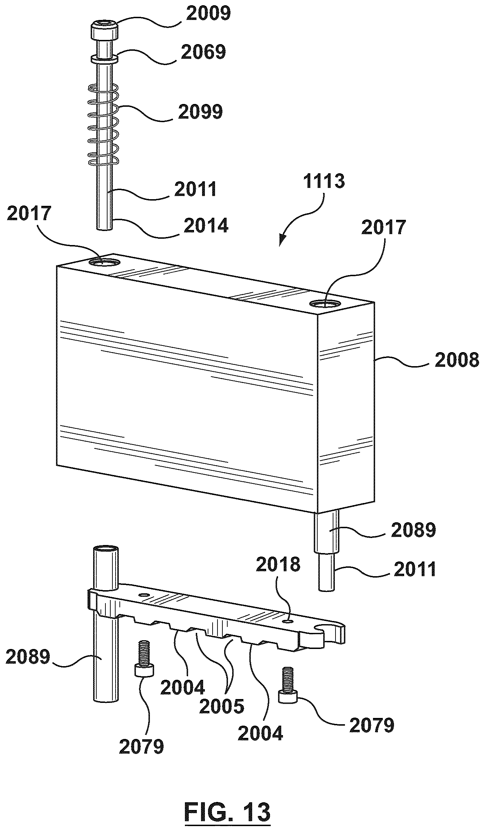

Each of the adaptive tonnage blocks 1113 extends in the X and Z directions and may be received in a respective recess or aperture 2016 in the inward surface 2143 of cavity plate 1110. Each adaptive tonnage block 1113 may include an engagement portion 2008 having an engagement surface 2023(Figure 12). Engagement portion 2008 may have a separation block 2018 fixedly secured thereto with bolts 2079 (Figure 13) passing thorough apertures in separation block 2018 and received into threaded apertures in the bottom surface of each engagement portion 2008. Thus, separation block 2018 can be configured for movement with engagement portion 2008. In some embodiments engagement portion 2008 and separation block 2018 may be integrally formed as a combined unitary portion of a tonnage block 1113.

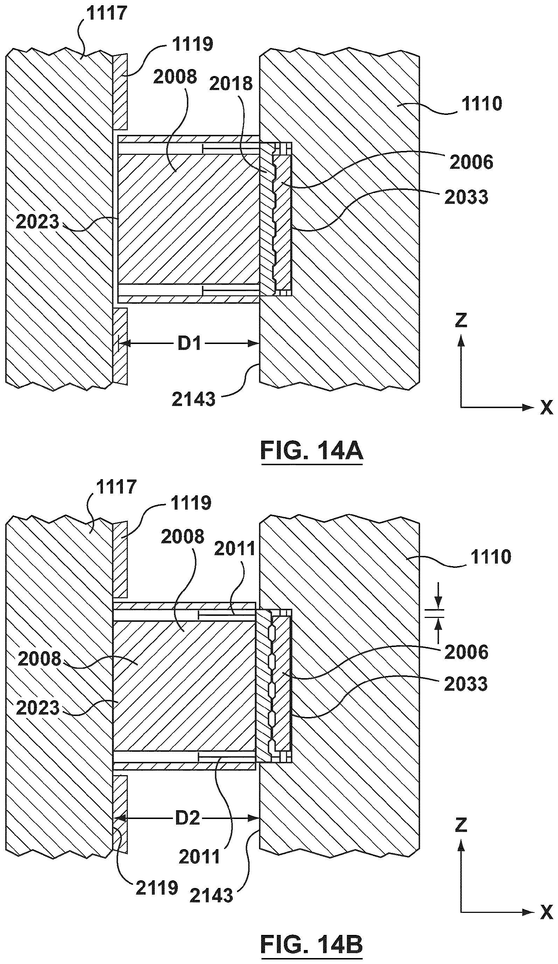

With particular reference to Figures 14A and 14B, each engagement portion 2008 and separation block 2018 are moveable together in a direction parallel to axis X: between (a) a first (retracted) position (Figure 14A) where the engagement surface 2023 is a first distance D1 from the surface 2143 of the cavity plate 1110 and (b) a second (extended) position (Figure 14B) where the engagement surface 2023 is positioned a second distance D2 spaced away from the front of surface 2143 of cavity plate 1110. In the retracted position, tonnage block 1113 may be at least partially received in an aperture in wear plate 1119 and a gap may be left between engagement surface 2023 and stripper plate 1117. With tonnage block 1113 in this position, the distance between the opposing surfaces of the stripper plate 1117 and cavity plate 1110 is defined by the mold stack 1111 and the regular tonnage blocks 1118, and D1 (i.e. the distance between the engagement surface 2023 of the tonnage block 1118 and the surface 2143 of the cavity plate 1110 in the retracted position) is no more, and possibly is less, than the height of the regular tonnage blocks 1118. In the extended position, tonnage block 1113 is fully received in an aperture in wear plate 1119 and the engagement surface 2023 of engagement portion 2008 is in abutment with the surface 2119 of the stripper plate 1117. But distance D2 (i.e. the distance between the engagement surface 2023 of the tonnage block 1118 and the surface 2143 of the cavity plate 1110 in the extended position) is greater than D1 and the height of regular tonnage blocks 1118 and thus the distance between the opposing surfaces of the cavity plate 1110 and the stripper plate 1117 is increased by extension of the adaptive tonnage blocks 1113. Thus the height H and corresponding mold shut height S can be increased.

When the engagement surface 2023 is at the first (retracted) position (Figure 14A) the injection mold 1100 may be in its standard mold operating configuration. When the engagement surface 2023 of the adaptive tonnage block 1113 is in its second (extended) position (Figure 14B), the injection mold 1100 may be in an alternate operational configuration such as for example the vent cleaning operational configuration. The movement of the adaptive tonnage blocks 1113 may be coordinated with the movement of core plate adjustment mechanism 3000 and neck ring adjustment mechanism 4000 as described above.

With particular reference to Figures 12, 13, 14A and 14B, in addition to engagement portions 2008 and separation blocks 2118, each adaptive tonnage block 1113 may have a driving portion 2006 which is moveable with sliding motion in a direction parallel to the Z axis between first and second positions. The driving portion 2006 may be received with apertures 2016 in the cavity plate 1110 and driving portion 2006 has a surface 2033 which rests against an adjacent surface of the cavity plate 1110 in the apertures 2016 in the cavity plate. Thus, a load on the driving portion 2006 acting in the direction parallel to axis X towards the cavity plate 1110 can be transmitted to the cavity plate 1110. In the first position (shown in Figures 12 and 14A), upper protrusions 2007 on the surface of driving portion 2006 are received in recesses 2005 on the rear surface of the separation block 2018.

Similarly, in such a position, the recesses 2002 on driving portion 2006 may receive protrusions 2004 on the separation block 2018. In such a position, all the protrusions may not engage or at least are in such a position that the engagement portion 2008 is in its first position referenced above. Driving portion 2006 may be moved from the position shown in Figures 12 and 14A in a direction parallel to axis Z to a position shown in Figure 14B where upper protrusions 2007 on its surface cam against the protrusions 2004 on the adjacent surface of the separation block 2018 and move the separation block 2018 along with engagement portion 2008 to a position where the protrusions 2007 are generally aligned with protrusions 2004 in the Z direction. This has the effect of causing the engagement portions 2008 to move outwardly in a direction parallel to the X axis. In this position an additional separation distance will be created between the opposed surface 2143 of cavity plate 1103 and the surface 2119 of stripper plate 1117.

The movement of engagement portion 2008 and separation block 2018 is limited to the aforementioned back and forward movements parallel to the X axis. This limited movement may be accomplished in many ways. For example, a pair of spaced pin members 2011 (Figure 13) may be provided proximate opposed ends of the engagement portion 2006 having shafts that are generally axially aligned with axis X. The shafts of pins 2011 may have bottom threaded end portions 2014 that pass through the engagement portion 2008, separation block 2018 and driving portion 2006 of adaptive tonnage blocks 1113 and are received in corresponding threaded apertures in the cavity plate 1110. Thus the pins 2011 secure the adaptive tonnage blocks 1113 to the cavity plate 1110. Shafts of pins 2011 may also have upper portions that at their upper end are integrally connected with heads 2009. Each pin 3011 may be received through a generally cylindrical sleeve tube 2089 that may be itself be housed in a generally cylindrical pad aperture 2017 that passes entirely through engagement portion 2008. The sleeve 2089 may also be housed within and pass through an aligned aperture in separation block 2018. Below each pin head 2009 of pin 2011 is a shoulder portion 2069 and beneath the shoulder 2069 is a spring 2099 which engages and is retained in compression between shoulder 2069 and separation block 2018. Spring 2099 may fit around the outer surface of sleeve 2089. Engagement portion 2008 and separation block 2018 may slide up and down relative to sleeve 2089. Thus, when engagement portion 2008 and separation block are moved by driving portion 2006, there will be a restoring force exerted by the spring 2099 as it is held between the shoulder 2069 and separation block 2018. It will be appreciated that the engagement portion 2008 may move in a direction parallel to axis X as the apertures slide over pins 2011 between an extended position, and a retracted position where the protrusions 2004 of the separation block 2018 are transversely aligned and in abutment with the recesses 2002 of the driving portion 2006 (i.e. the engagement portion 2008 is fully retracted).

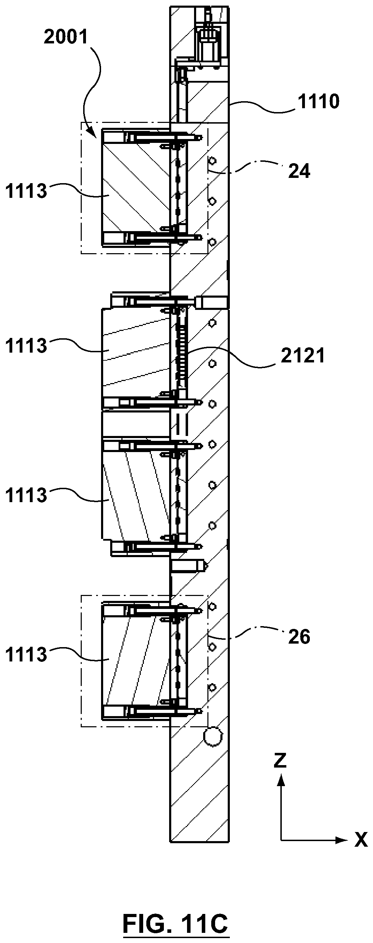

With particular reference now to Figures 11A and 12 it can be observed that to cause driving portion 2006 to be driven in reciprocating movement in a direction parallel to axis Z, driving portion 2006 may be secured to a connecting rod 2030 that generally runs in a direction parallel to axis Z. Driving portion 2006 may be secured to connecting rod 2030 by interlocking teeth 2121 (Figure 11C) or by other suitable methods such as by way of example welding or bolting. Engagement portion 2008, separation block 2018 and driving portion 2006 may be made of any suitable material such as by way of example stainless steel. Similarly, connecting rods 2030 may be made from any suitable material such as by way of example a heat-treated steel. A single rod 2030 may be attached to driving portions 2006 of one or more aligned back up pad devices 3001. For example, the rod 2030 depicted in the cross sectional view of Figure 11B is attached to four driving portions 2006 of separate adaptive tonnage blocks 1113.

A plurality of connecting rods 2030 may be provided so that the driving portion 2006 of each adaptive tonnage block 1113 in the cavity plate 1110 may be connected to at least one connecting rod 2030. The plurality of connecting rods 2030, which all may be aligned in a direction parallel to axis Z, may be themselves be all interconnected by any known and suitable attachment mechanism such as bolting, welding etc. to a common actuator cross bar 2035 that may be made from any suitable material such as by way of example only stainless steel.

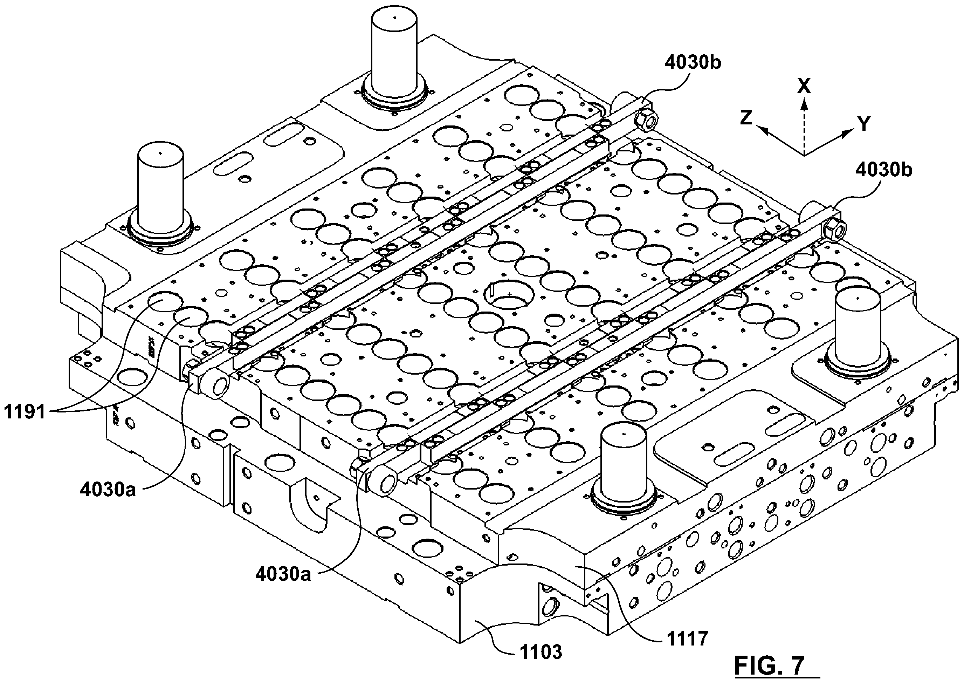

Actuator cross bar 2035 may be oriented in a direction generally orthogonal to the connecting rods and generally parallel to axis Y. Thus connecting rods 2030 and actuating bar 2035 may together constitute a connection mechanism to connect the driving portion 2006 with an actuator. Connecting rods 2030 may in some embodiments such as is illustrated in Figure 10 and 11A be housed and moveable within enclosed channels that extend within the body of the cavity plate 1110, and thus will be generally not be visible when looking at the cavity plate such as in the view shown in Figure 7. In other embodiments, the connecting rods 2030 may be housed and moveable within open channels where the channels are formed as longitudinally extending grooves defined in the cavity plate and at the inward facing surface of cavity plate 1110.

Actuator bar 2035 may in turn be secured in a suitable manner to an actuating device 2045 (Figure 11A) such as a servo motor, pneumatic piston, under the control of controller 3050. Actuating device 2045 may have an actuating shaft (not shown) capable of providing intermittent, controlled, reciprocating movement back and forth in directions that are generally parallel to axis Z. Actuating device 2045 may thus have communication link to the controller 3050. Actuating device 2045 may be mounted within the cavity plate 1110 with screws connecting it to the cavity plate 1110. By means of the interconnection of actuating device 2045 and its reciprocating shaft interconnected to actuating cross bar 2035, which in turn is connected to each of the connecting rods 2030, which in turn are interconnected to driving portions 2006 of adaptive tonnage blocks 1113, cyclical, controlled and intermittent movement of the actuating shaft of the actuating device 2045, may result in synchronized movement of each driving portions 2006 in a direction parallel to axis Z, and thus the synchronized movement of all engagement portions 2008 in the direction parallel to axis X. By way of example only, actuator shaft of actuating device 2045 may be moved about 10mm in a direction parallel to axis Z, resulting in a corresponding movement parallel to the Z axis of the connecting rods 2030 and the driving portions 2006 of the back up pad devices 3001. The engagement of driving portions 2006 with separation blocks 2018 and thus engagement portions 2008 may translate into 0.5mm movement of the engagement portions 2008 in a direction parallel to axis X to result in an increase in separation of 0.5mm separation between the opposed surfaces of the cavity plate 1110 and the stripper plate 1117. Under the control of controller 3050, this may occur in a coordinated fashion with the movement of neck ring halves 1114a, 1114b in a direction parallel to the Y-axis and the movement of back up pads 3001 in a direction parallel to the X-axis.

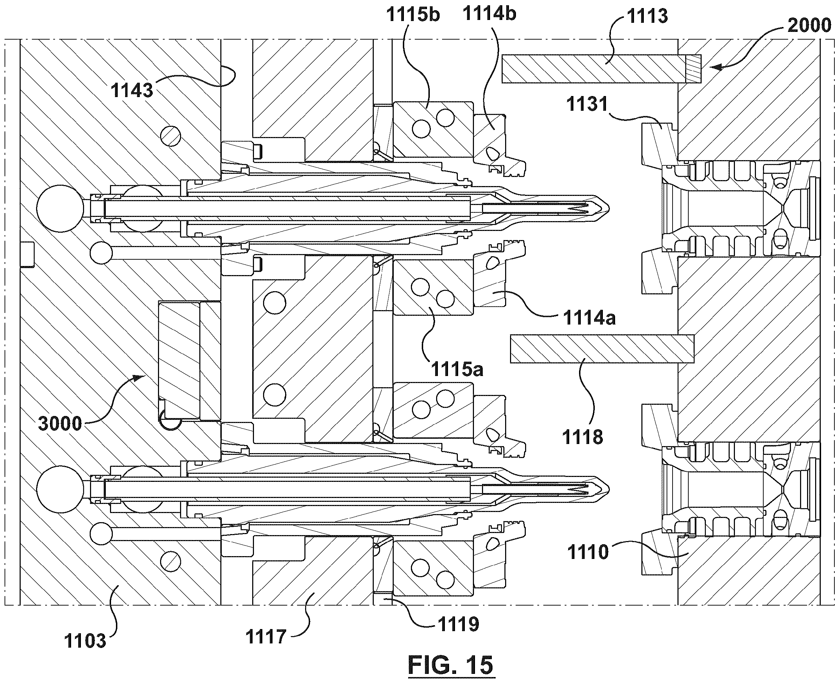

During normal molding use, core plate 1103 and cavity plate 1110 will be cycled to a closed position as shown in Figure 14 with the mold stack therebetween providing a first operational configuration for the mold 1100. While in this position, the mold stack 1111 is subjected to compressive clamping force A (Figure 2A) as mold material is injected and then cooled and hardened. Subsequent to cooling of parts, the stack is moved from its normal operational configuration and cycled to its open position (Figure 15), in which the clamping force is released and the core and cavity plates are spread longitudinally relatively apart, thus taking on a non-operational configuration (i.e. the mold is not in a configuration where it is being operated to inject mold material into the mold cavities). In the mold open configuration, finished parts are ejected in a conventional manner as the stripper plate 1117 slides away from the core plate 1103 and, slide bars 1115a, 1115b and neck ring halves 1114a, 1114b are moved laterally outwardly to the position shown in Figure 15. During this normal operation, vents in neck ring halves 1114a, 1114b may function substantially to permit gas to escape, but prevent substantial quantities of injected mold material from entering the vents. In such normal operation, in order for the mold stack to close to the desired molding configuration, each of the cavity plate adjustment mechanism 2000 and core plate adjustment mechanism 3000 operate in their first (retracted) conditions, and neck ring adjustment mechanism 4000 operates in its first (normal) condition as described above. The positions of the mold stack components in the closed state of this normal molding operation are as depicted in Figure 2A.

Periodically, it may be desired to place the mold 1100 in an alternate operational configuration, such as an operational configuration which can clean vents as described above. As will be appreciated from the foregoing description, cleaning may entail providing additional clearance between neck ring halves 1114a, 1114b to increase vent size. At the beginning of a cleaning cycle, the mold 1100 may be open as shown in Figure 15. Actuating device 3045 may then be cycled to cause back up pads 3001 to be extended, which will result in core plate 1103 being spaced apart from stripper plate 1117 and the neck ring halves 1114a, 1114b. As noted, cycling of actuating device 3045 also causes movement of actuating blocks 4010 so that thrust pad devices 4012a, 4012b push the slide bars 1115a, 1115b and therefore the neck ring halves 1114a, 1114b apart. Meanwhile, actuating device 2045 may cause adaptive tonnage blocks 1113 to be extended, which in turn causes cavity plate 1110 and stripper plate 1117 to have an increased spacing apart from one another. As will now be appreciated, this provides lateral clearance permitting the neck ring halves 1114a, 1114b to be held spaced apart. The mold may then be closed, by appropriate relative movement between the cavity plate 1110 and the wear plate 1119, stripper plate 1117 and core plate 1103, but without application of any significant clamping force A.

In this alternate (cleaning) operational configuration, the components of the mold stack are positioned as shown in Figure 16 when the mold stack is closed. In this condition, an enlarged gap exists between the neck ring halves. Once the mold components are in this configuration, clamping force A may be applied. In some embodiments, clamping force A may be reduced relative to the clamping force that is applied during normal molding operation. In other embodiments, the clamping force could be the same or even greater than in the normal operational mode. This might be required because the molding material is acting on a larger surface area of the components. Molding material is then injected and cooled and molded parts are ejected substantially as described above. Due to the spacing apart of neck ring halves 1114a, 1114b during molding, molding material occupies the enlarged vents which may have the effect of removing residue from the vents. This may also result in excess flash material on finished parts. Such parts may therefore be discarded.

In other embodiments, cycling of actuating device 3045 and actuating device 2045 may occur with the mold in the position depicted in Figure 16 - that is with the mold closed. In such a case, mold components may be pushed to their alternate (cleaning) configurations with cavity plate adjustment mechanism 2000, core plate adjustment mechanism 3000 and neck ring adjustment mechanism 4000 being operated so that the components adopt their alternate configurations.

In other embodiments, the cavity plate adjustment mechanism, core plate adjustment mechanism and the neck ring adjustment mechanism may be used alone or in combination to selectively create spacing between mold stack components for reasons other than vent cleaning. In some embodiments, all or some of core plate adjustment devices 3001 and cavity plate adjustment devices 2001 could be provided with individual activation instead of having connectors like 2030 or 3030. Individual activation could be done by hydraulic and/ or pneumatic device (cylinder) or by servo drives (electrical).

As an alternative, or even in addition, to employing the mold shut height adjustment apparatus described herein for vent cleaning, the apparatus may also be used to implement the method described in commonly assigned US patent publication 2012/0219651 to Weber et al., published on August 30, 2012. Specifically, the present non-limiting embodiments of the mold shut height adjustment apparatus may be useful in implementing a pressure-control system in an injection mold for selectively changing a volume of a mold cavity defined within the mold after isolation thereof from a stream of molding material. A technical effect attributable to the foregoing may include, amongst others, providing a pre-eject function while maintaining contact between the molded article and the molding surfaces of the mold cavity.

It should be understood that for the purposes of the description provided above and claims presented below, the term "fluid", "gas" or "air" are meant to denote fluid present in the molding cavity and being vented from the molding cavity and the molding material fills in the molding cavity. The terms "fluid", "gas" or "air" can denote ambient air around the molding system, as well as the ambient air mixed in with other substances potentially present within the molding system.

## Claims

1. A method of operating an injection mold (1100) with first and second mold halves (1222, 1223) supported and movable relative to each other, the method comprising:
i. operating the mold (1100) in a first operational configuration in which said first and second mold halves (1222, 1223) have a first mold shut height S1;
ii. varying the mold shut height of the mold (1100) by operating a mold shut height adjustment apparatus which is integrated with and embedded within at least one of said first and second mold halves (1222, 1223); and
iii. operating the mold (1100) in a second operational configuration in which said first and second mold halves (1222, 1223) have a second mold shut height S2 that is different to the first mold shut height S1;
wherein varying the mold shut height of the mold (1100) includes adjusting a configuration of neck ring devices (1114a, 1114b) of the injection mold (1100).

2. A method as claimed in claim 1, wherein said first operational configuration is a standard molding configuration and said second operational configuration is a vent cleaning molding configuration.

3. An injection mold (1100) comprising:
(a) a first mold half (1222);
(b) a second mold half (1223), said first and second mold halves being supported and movable relative to each other, said first and second mold halves (1222, 1223) having a mold shut height when said mold is in an operational configuration; and
(c) a mold shut height adjustment apparatus operable to provide for a change in the mold shut height in association with a change of said mold (1100) from a first operational configuration, in which said first and second mold halves (1222, 1223) have a first mold shut height S1, to a second operational configuration, in which said first and second mold halves (1222, 1223) have a second mold shut height S2 that is different to the first mold shut height S1; **characterised in that** said mold shut height adjustment apparatus is integrated with and embedded within at least one of said first and second mold halves (1222, 1223) and comprises a neck ring adjustment mechanism (4000) operable for adjusting a configuration of neck ring devices (1114a, 1114b) of the injection mold (1100).

4. An injection mold (1100) according to claim 3, wherein said first mold half (1222) comprises a core plate (1103) and said mold shut height adjustment apparatus further comprising a core plate adjustment mechanism (3000) associated with said core plate (1103), said core plate adjustment mechanism (3000) being operable to adjust said mold shut height.

5. An injection mold (1100) according to claim 4, wherein said core plate adjustment mechanism (3000) includes at least one core plate adjustment device (3001) received in a recess defined in said core plate (1103) of said first mold half (1222), said at least one core plate adjustment device (3001) being operable to move between a retracted position and an extended position, wherein said at least one core plate adjustment device (3001) comprises an engagement portion (3008) with an engagement surface (3023), and said mold (1100) being operable such that when said core plate adjustment device (3001) is in said extended position, said engagement surface (3023) provides for an increased distance between said core plate (1103) and a stripper plate (1117) of said first mold half (1222) to thereby adjust said mold shut height.

6. An injection mold (1100) as claimed in claim 5, wherein said engagement portion (3008) is operable to move generally in a first direction when moving between said retracted position and said extended position and wherein said core plate adjustment device (3001) further comprises a driving portion (3006) positioned adjacent to said engagement portion (3023), said driving portion (3006) operable to move in a second direction generally orthogonal to said first direction.

7. An injection mold (1100) as claimed in claim 6, wherein said at least one core plate adjustment device (3001) further comprises an actuating device (3045) and a connection mechanism and at least part of each of which is embedded in said core plate (1103), said connection mechanism being operable to interconnect said driving portion (3006) to said actuating device.

8. An injection mold (1100) as claimed in claim 5, wherein said core plate adjustment mechanism (3000) comprises a plurality of core plate adjustment devices (3001) each received in a respective recess in an outward surface of said core plate (1103) and being spaced about said core plate, said plurality of core plate adjustment devices (3001) each being operable to move between a retracted position and an extended position, wherein said at least one core plate adjustment devices (3001) each comprises an engagement portion (3008) with an engagement surface (3023), and said mold (1100) being operable such that when each of said core plate adjustment devices (3001) is in said extended position, said engagement surface (3023) provides for an increased distance between said core plate (1103) and said stripper plate (1117) to thereby adjust said mold shut height.

9. An injection mold (1100) as claimed in claim 8, wherein said at least one core plate adjustment device (3001) further comprises an actuating device (3045) and a connection mechanism operable to interconnect said driving portions (3006) of said plurality of core plate adjustment devices (3001) to said actuating device (3045).

10. An injection mold (1100) as claimed in claims in claim 9, wherein said connection mechanism comprises a common connecting rod (3030) and actuator cross bar (3035) interconnecting a plurality of core plate adjustment devices (3001) to said actuating device (3045), and wherein and at least part of each of said connecting rod (3030), said actuator cross bar (3035) and said actuating device (3045) are embedded in said core plate (1103).

11. An injection mold (1100) according to any one of claims 3 to 10, wherein said second mold half (1223) comprises a cavity plate (1110), said mold shut height adjustment apparatus further comprising a cavity plate adjustment mechanism (2000) associated with said cavity plate (1110), said cavity plate adjustment mechanism (2000) being operable to adjust said mold shut height.

12. An injection mold (1100) according to claim 11, wherein said cavity plate adjustment mechanism (2000) includes a cavity plate adjustment device (2001) at least partially received in a recess in an outward surface of said cavity plate (1110) of said second mold half (1223), said cavity plate adjustment device (2001) being operable to be moved between a retracted position and an extended position, wherein said cavity plate adjustment device (2001) has an engagement portion (2008) with an engagement surface (2023), and said mold (1100) operable such that when said cavity plate adjustment device (2001) is in said extended position, said engagement surface (2023) provides for an increased distance between said cavity plate (1110) and a stripper plate (1117) of said first mold half (1222) to thereby adjust said mold shut height.

13. An injection mold (1100) as claimed in claim 12, wherein said engagement portion (2008) is operable to move generally in a first direction when moving between said retracted position and said extended position and wherein said cavity plate adjustment device (2001) further comprises a driving portion (2006) positioned adjacent to said engagement portion (2008), said driving portion (2006) operable to move in a second direction generally orthogonal to said first direction.

14. An injection mold (1100) as claimed in claim 13, wherein said at least one cavity plate adjustment device (2001) further comprises an actuating device (2045) and a connection mechanism operable to interconnect said driving portion (2006) to said actuating device (2045).

15. An injection mold (1100) as claimed in claim 14, wherein and at least part of each of said connection mechanism and said actuating device (2001) are embedded in said cavity plate (1110).

16. An injection mold (1100) as claimed in claim 12, wherein said cavity plate adjustment mechanism (2000) comprises a plurality of cavity plate adjustment devices (2001) each at least partially received in a respective recess in an outward surface of said cavity plate (1110) and being spaced about said cavity plate (1110), said plurality of cavity plate adjustment devices (2001) being operable to move between a retracted position and an extended position, wherein said at least one cavity plate adjustment devices (2001) each comprises an engagement portion (2008) with an engagement surface (2023), and said mold operable such that when each of said cavity plate adjustment devices (2001) is in said extended position, said engagement surface (2023) provides for an increased distance between said cavity plate (1110) and said stripper plate (1117) to thereby adjust said mold shut height.

17. An injection mold (1100) as claimed in claim 16, wherein said at least one cavity plate adjustment device (2001) further comprises an actuating device (2045) and a connection mechanism operable to interconnect said driving portions (2006) of said plurality of cavity plate adjustment devices to said actuating device.

18. An injection mold (1100) as claimed in claim 17, wherein and at least part of each of said connection mechanism and said actuating device (2045) are embedded in said cavity plate (1110).

19. An injection mold (1100) as claimed in claim 18, wherein said connection mechanism comprises a common connecting rod (2030) and actuator bar (2035) interconnecting a plurality of cavity plate adjustment devices to said actuating device.

20. An injection mold (1100) according to any one of claims 3 to 19, wherein said neck ring adjustment mechanism (4000) includes a thrust device (4012) associated with a core plate (1103) of said first mold half (1222), said thrust device (4012) operable to engage a connecting member (4030), said connecting member connected to at least one slide bar (1115) associated with each of a plurality of neck ring devices (4014a, 4014b), said thrust device (4012) operable to be moved by actuating device (3045) to move said connecting member (4030) to thereby move said at least one slide bar (1115) and thus move said neck ring devices (4014a, 4014b) between a first operational configuration and a second operational configuration.

## Patentansprüche

1. Verfahren zum Betreiben einer Spritzgießform (1100) mit ersten und zweiten Formhälften (1222, 1223), die sich gegenseitig stützen und relativ zueinander beweglich sind, wobei das Verfahren umfasst:
i. Betreiben der Form (1100) in einer ersten Betriebskonfiguration, in welcher die ersten und zweiten Formhälften (1222, 1223) eine erste Formschließhöhe S1 aufweisen;
ii. Ändern der Formschließhöhe der Form (1100) durch Betätigen einer Formschließhöhen-Einstellvorrichtung, die in mindestens eine von den ersten und/oder zweiten Formhälften (1222, 1223) integriert und eingebettet ist; und
iii. Betreiben der Form (1100) in einer zweiten Betriebskonfiguration, in welcher die ersten und zweiten Formhälften (1222, 1223) eine zweite Formschließhöhe S2 aufweisen, die von der ersten Formschließhöhe S1 verschieden ist;
wobei das Ändern der Formschließhöhe der Form (1100) ein Anpassen einer Konfiguration von Halsringeinrichtungen (1114a, 1114b) der Spritzgießform (1100) umfasst.

2. Verfahren nach Anspruch 1, wobei die erste Betriebskonfiguration eine Standardformkonfiguration ist, und die zweite Betriebskonfiguration eine Entlüftungsöffnungsreinigungs-Formkonfiguration ist.

3. Spritzgießform (1100), umfassend:
(a) eine erste Formhälfte (1222);
(b) eine zweite Formhälfte (1223), wobei die ersten und zweiten Formhälften sich gegenseitig stützen und relativ zueinander beweglich sind, die ersten und zweiten Formhälften (1222, 1223) eine Formschließhöhe aufweisen, wenn die Form in einer Betriebskonfiguration ist; und
(c) eine Formschließhöhen-Einstellvorrichtung, die so ausgelegt ist, dass sie in Verbindung mit einer Umstellung der Form (1100) von einer ersten Betriebskonfiguration, in welcher die ersten und zweiten Formhälften (1222, 1223) eine erste Formschließhöhe S1 aufweisen, in eine zweite Betriebskonfiguration, in welcher die ersten und zweiten Formhälften (1222, 1223) eine zweite Formschließhöhe S2 aufweisen, die von der ersten Formschließhöhe verschieden ist, eine Änderung der Formschließhöhe bereitstellt;
**dadurch gekennzeichnet, dass**
die Formschließhöhen-Einstellvorrichtung in mindestens eine von den ersten und zweiten Formhälften (1222, 1223) integriert und eingebettet ist und einen Halsringeinstellmechanismus (4000) umfasst, der zum Anpassen einer Konfiguration von Halsringeinrichtungen (1114a, 1114b) der Spritzgießform (1100) ausgelegt ist.

4. Spritzgießform (1100) nach Anspruch 3, wobei die erste Formhälfte (1222) eine Kernplatte (1103) umfasst, und die Formschließhöhen-Einstellvorrichtung ferner einen Kernplatteneinstellmechanismus (3000) umfasst, der mit der Kernplatte (1103) assoziiert ist, wobei der Kernplatteneinstellmechanismus (3000) zum Einstellen der Formschließhöhe ausgelegt ist.

5. Spritzgießform (1100) nach Anspruch 4, wobei der Kernplatteneinstellmechanismus (3000) mindestens eine Kernplatteneinstelleinrichtung (3001) umfasst, die in einer Vertiefung, die in der Kernplatte (1103) der ersten Formhälfte (1222) definiert ist, aufgenommen ist, wobei die mindestens eine Kernplatteneinstelleinrichtung (3001) ausgelegt ist, um sich zwischen einer eingefahrenen Position und einer ausgefahrenen Position zu bewegen, wobei die mindestens eine Kernplatteneinstelleinrichtung (3001) einen Eingriffsabschnitt (3008) mit einer Eingriffsfläche (3023) umfasst, und die Form (1100) derart ausgelegt ist, dass, wenn die Kernplatteneinstelleinrichtung (3001) in der ausgefahrenen Position ist, die Eingriffsfläche (3023) einen vergrößerten Abstand zwischen der Kernplatte (1103) und einer Abstreifplatte (1117) der ersten Formhälfte (1222) bereitstellt, um dadurch die Formschließhöhe einzustellen.

6. Spritzgießform (1100) nach Anspruch 5, wobei der Eingriffsabschnitt (3008) so ausgelegt ist, dass er sich bei Bewegung zwischen der eingefahrenen Position und der ausgefahrenen Position im Allgemeinen in einer ersten Richtung bewegt, und wobei die Kernplatteneinstelleinrichtung (3001) ferner einen Antriebsabschnitt (3006) umfasst, der benachbart zum Eingriffsabschnitt (3023) positioniert ist, wobei der Antriebsabschnitt (3006) so ausgelegt ist, dass er sich in einer zweiten Richtung bewegt, die im Allgemeinen orthogonal zur ersten Richtung ist.

7. Spritzgießform (1100) nach Anspruch 6, wobei die mindestens eine Kernplatteneinstelleinrichtung (3001) ferner eine Betätigungseinrichtung (3045) und einen Verbindungsmechanismus umfasst, von welchen jeweils wenigstens ein Teil in die Kernplatte (1103) eingebettet ist, wobei der Verbindungsmechanismus zum Verbinden des Antriebsabschnitts (3006) mit der Betätigungseinrichtung ausgelegt ist.

8. Spritzgießform (1100) nach Anspruch 5, wobei der Kernplatteneinstellmechanismus (3000) mehrere Kernplatteneinstelleinrichtungen (3001) umfasst, die jeweils in einer jeweiligen Vertiefung in einer Außenfläche der Kernplatte (1103) aufgenommen und um die Kernplatte beabstandet sind, wobei die mehreren Kernplatteneinstelleinrichtungen (3001) jeweils ausgelegt sind, um sich zwischen einer eingefahrenen Position und einer ausgefahrenen Position zu bewegen, wobei die mindestens einen Kernplatteneinstelleinrichtungen (3001) jeweils einen Eingriffsabschnitt (3008) mit einer Eingriffsfläche (3023) umfassen, und die Form (1100) derart ausgelegt ist, dass, wenn jede der Kernplatteneinstelleinrichtungen (3001) in der ausgefahrenen Position ist, die Eingriffsfläche (3023) einen vergrößerten Abstand zwischen der Kernplatte (1103) und der Abstreifplatte (1117) bereitstellt, um dadurch die Formschließhöhe einzustellen.

9. Spritzgießform (1100) nach Anspruch 8, wobei die mindestens eine Kernplatteneinstelleinrichtung (3001) ferner eine Betätigungseinrichtung (3045) und einen Verbindungsmechanismus umfasst, der zum Verbinden der Antriebsabschnitte (3006) der mehreren Kernplatteneinstelleinrichtungen (3001) mit der Betätigungseinrichtung (3045) ausgelegt ist.

10. Spritzgießform (1100) nach Anspruch 9, wobei der Verbindungsmechanismus eine gemeinsame Verbindungsstange (3030) und eine Aktor-Querstange (3035) umfasst, die mehrere Kernplatteneinstelleinrichtungen (3001) mit der Betätigungseinrichtung (3045) verbinden, und wobei wenigstens ein Teil einer jeden von der Verbindungsstange (3030), der Aktor-Querstange (3035) und der Betätigungseinrichtung (3045) in die Kernplatte (1103) eingebettet ist.

11. Spritzgießform (1100) nach einem der Ansprüche 3 bis 10, wobei die zweite Formhälfte (1223) eine Hohlraumplatte (1110) umfasst, und die Formschließhöhen-Einstellvorrichtung ferner einen Hohlraumplatteneinstellmechanismus (2000) umfasst, der mit der Hohlraumplatte (1110) assoziiert ist, wobei der Hohlraumplatteneinstellmechanismus (2000) zum Einstellen der Formschließhöhe ausgelegt ist.

12. Spritzgießform (1100) nach Anspruch 11, wobei der Hohlraumplatteneinstellmechanismus (2000) eine Hohlraumplatteneinstelleinrichtung (2001) umfasst, die wenigstens teilweise in einer Vertiefung in einer Außenfläche der Hohlraumplatte (1110) der zweiten Formhälfte (1223) aufgenommen ist, wobei die Hohlraumplatteneinstelleinrichtung (2001) ausgelegt ist, um zwischen einer eingefahrenen Position und einer ausgefahrenen Position bewegt zu werden, wobei die Hohlraumplatteneinstelleinrichtung (2001) einen Eingriffsabschnitt (2008) mit einer Eingriffsfläche (2023) umfasst, und die Form (1100) derart ausgelegt ist, dass, wenn die Hohlraumplatteneinstelleinrichtung (2001) in der ausgefahrenen Position ist, die Eingriffsfläche (2023) einen vergrößerten Abstand zwischen der Hohlraumplatte (1110) und einer Abstreifplatte (1117) der ersten Formhälfte (1222) bereitstellt, um dadurch die Formschließhöhe einzustellen.

13. Spritzgießform (1100) nach Anspruch 12, wobei der Eingriffsabschnitt (2008) so ausgelegt ist, dass er sich bei Bewegung zwischen der eingefahrenen Position und der ausgefahrenen Position im Allgemeinen in einer ersten Richtung bewegt, und wobei die Hohlraumplatteneinstelleinrichtung (2001) ferner einen Antriebsabschnitt (2006) umfasst, der benachbart zum Eingriffsabschnitt (2008) positioniert ist, wobei der Antriebsabschnitt (2006) so ausgelegt ist, dass er sich in einer zweiten Richtung bewegt, die im Allgemeinen orthogonal zur ersten Richtung ist.

14. Spritzgießform (1100) nach Anspruch 13, wobei die mindestens eine Hohlraumplatteneinstelleinrichtung (2001) ferner eine Betätigungseinrichtung (2045) und einen Verbindungsmechanismus umfasst, der zum Verbinden des Antriebsabschnitts (2006) mit der Betätigungseinrichtung (2045) ausgelegt ist.

15. Spritzgießform (1100) nach Anspruch 14, wobei wenigstens ein Teil eines jeden von dem Verbindungsmechanismus und der Betätigungseinrichtung (2001) in die Hohlraumplatte (1110) eingebettet ist.

16. Spritzgießform (1100) nach Anspruch 12, wobei der Hohlraumplatteneinstellmechanismus (2000) mehrere Hohlraumplatteneinstelleinrichtungen (2001) umfasst, die jeweils wenigstens teilweise in einer jeweiligen Vertiefung in einer Außenfläche der Hohlraumplatte (1110) aufgenommen und um die Hohlraumplatte (1110) beabstandet sind, wobei die mehreren Hohlraumplatteneinstelleinrichtungen (2001) ausgelegt sind, um sich jeweils zwischen einer eingefahrenen Position und einer ausgefahrenen Position zu bewegen, wobei die mindestens einen Hohlraumplatteneinstelleinrichtungen (2001) jeweils einen Eingriffsabschnitt (2008) mit einer Eingriffsfläche (2023) umfassen, und die Form (1100) derart ausgelegt ist, dass, wenn jede der Hohlraumplatteneinstelleinrichtungen (2001) in der ausgefahrenen Position ist, die Eingriffsfläche (2023) einen vergrößerten Abstand zwischen der Hohlraumplatte (1110) und der Abstreifplatte (1117) bereitstellt, um dadurch die Formschließhöhe einzustellen.

17. Spritzgießform (1100) nach Anspruch 16, wobei die mindestens eine Hohlraumplatteneinstelleinrichtung (2001) ferner eine Betätigungseinrichtung (2045) und einen Verbindungsmechanismus umfasst, der zum Verbinden der Antriebsabschnitte (2006) der mehreren Hohlraumplatteneinstelleinrichtungen mit der Betätigungseinrichtung ausgelegt ist.

18. Spritzgießform (1100) nach Anspruch 17, wobei wenigstens ein Teil eines jeden von dem Verbindungsmechanismus und der Betätigungseinrichtung (2045) in die Hohlraumplatte (1110) eingebettet ist.

19. Spritzgießform (1100) nach Anspruch 18, wobei der Verbindungsmechanismus eine gemeinsame Verbindungsstange (2030) und eine Aktorstange (2035) umfasst, die mehrere Hohlraumplatteneinstelleinrichtungen mit der Betätigungseinrichtung verbinden.

20. Spritzgießform (1100) nach einem der Ansprüche 3 bis 19, wobei der Halsringeinstellmechanismus (4000) eine Schubeinrichtung (4012) umfasst, die mit einer Kernplatte (1103) der ersten Formhälfte (1222) assoziiert ist, wobei die Schubeinrichtung (4012) zum Eingreifen in ein Verbindungselement (4030) ausgelegt ist, wobei das Verbindungselement mit mindestens einer Schiebestange (1115) verbunden ist, die mit jeder von mehreren Halsringeinrichtungen (4014a, 4014b) assoziiert ist, wobei die Schubeinrichtung (4012) ausgelegt ist, um durch die Betätigungseinrichtung (3045) bewegt zu werden, um das Verbindungselement (4030) zu bewegen, um dadurch die mindestens eine Schiebestange (1115) zu bewegen, und infolgedessen die Halsringeinrichtungen (4014a, 4014b) zwischen einer ersten Betriebskonfiguration und einen zweiten Betriebskonfiguration zu bewegen.

## Revendications

1. Procédé de fonctionnement d'un moule à injection (1100) ayant des première et deuxième moitiés de moule (1222, 1223) supportées et mobiles l'une par rapport à l'autre, le procédé comprenant le fait :
i. de faire fonctionner le moule (1100) dans une première configuration de fonctionnement où lesdites première et deuxième moitiés de moule (1222, 1223) ont une première hauteur de fermeture de moule S1 ;
ii. de faire varier la hauteur de fermeture de moule du moule (1100) en faisant fonctionner un appareil de réglage de hauteur de fermeture de moule qui est intégré avec et incorporé dans au moins l'une desdites première et deuxième moitiés de moule (1222, 1223) ; et
iii. de faire fonctionner le moule (1100) selon une deuxième configuration de fonctionnement où lesdites première et deuxième moitiés de moule (1222, 1223) ont une deuxième hauteur de fermeture de moule S2 qui est différente de la première hauteur de fermeture de moule S1 ;
dans lequel la variation de la hauteur de fermeture de moule du moule (1100) comporte le réglage d'une configuration de dispositifs de bague de goulot (1114a, 1114b) du moule à injection (1100).

2. Procédé tel que revendiqué dans la revendication 1, dans lequel ladite première configuration de fonctionnement est une configuration de moulage standard et ladite deuxième configuration de fonctionnement est une configuration de moulage pour nettoyage d'évents.

3. Moule à injection (1100) comprenant :
(a) une première moitié de moule (1222) ;
(b) une deuxième moitié de moule (1223), lesdites première et deuxième moitiés de moule étant supportées et mobiles l'une par rapport à l'autre, lesdites première et deuxième moitiés de moule (1222, 1223) ayant une hauteur de fermeture de moule lorsque ledit moule se trouve dans une configuration de fonctionnement ; et
(c) un appareil de réglage de hauteur de fermeture de moule pouvant fonctionner pour effectuer un changement de la hauteur de fermeture de moule en association avec un passage dudit moule (1100) d'une première configuration de fonctionnement, dans laquelle lesdites première et deuxième moitiés de moule (1222, 1223) ont une première hauteur de fermeture de moule S1, à une deuxième configuration de fonctionnement dans laquelle lesdites première et deuxième moitiés de moule (1222, 1223) ont une deuxième hauteur de fermeture de moule S2 différente de la première hauteur de fermeture de moule S1 ;
**caractérisé en ce que** ledit appareil de réglage de hauteur de fermeture de moule est intégré et incorporé dans au moins l'une desdites première et deuxième moitiés de moule (1222, 1223) et comprend un mécanisme de réglage de bague de goulot (4000) pouvant fonctionner pour régler une configuration de dispositifs de bague de goulot (1114a, 1114b) de la moule à injection (1100).

4. Moule à injection (1100) selon la revendication 3, dans lequel ladite première moitié de moule (1222) comprend une plaque de noyau (1103) et ledit appareil de réglage de hauteur de fermeture de moule comprenant en outre un mécanisme de réglage de plaque de noyau (3000) associé à ladite plaque de noyau (1103), ledit mécanisme de réglage de plaque de noyau (3000) pouvant fonctionner pour régler ladite hauteur de fermeture de moule.

5. Moule à injection (1100) selon la revendication 4, dans lequel ledit mécanisme de réglage de plaque de noyau (3000) comporte au moins un dispositif de réglage de plaque de noyau (3001) reçu dans un évidement défini dans ladite plaque de noyau (1103) de ladite première moitié de moule (1222), ledit au moins un dispositif de réglage de plaque de noyau (3001) pouvant fonctionner pour se déplacer entre une position rétractée et une position étendue, où ledit au moins un dispositif de réglage de plaque de noyau (3001) comprend une partie d'engagement (3008) avec une surface d'engagement (3023), et ledit moule (1100) pouvant fonctionner de sorte que, lorsque ledit dispositif de réglage de plaque de noyau (3001) se trouve dans ladite position étendue, ladite surface d'engagement (3023) fournisse une distance accrue entre ladite plaque de noyau (1103) et une plaque d'extraction (1117) de ladite première moitié de moule (1222) pour régler ainsi ladite hauteur de fermeture de moule.

6. Moule à injection (1100) tel que revendiqué dans la revendication 5, dans lequel ladite partie d'engagement (3008) peut fonctionner pour se déplacer généralement dans une première direction lors du déplacement entre ladite position rétractée et ladite position étendue et dans lequel ledit dispositif de réglage de plaque de noyau (3001) comprend en outre une partie d'entraînement (3006) positionnée de manière adjacente à ladite partie d'engagement (3023), ladite partie d'entraînement (3006) pouvant fonctionner pour se déplacer dans une deuxième direction généralement orthogonale à ladite première direction.

7. Moule à injection (1100) tel que revendiqué dans la revendication 6, dans lequel ledit au moins un dispositif de réglage de plaque de noyau (3001) comprend en outre un dispositif d'actionnement (3045) et un mécanisme de liaison, et au moins une partie de chacun de ceux-ci est incorporée dans ladite plaque de noyau (1103), ledit mécanisme de liaison pouvant fonctionner pour interconnecter ladite partie d'entraînement (3006) audit dispositif d'actionnement.

8. Moule à injection (1100) tel que revendiqué dans la revendication 5, dans lequel ledit mécanisme de réglage de plaque de noyau (3000) comprend une pluralité de dispositifs de réglage de plaque de noyau (3001), chacun étant reçu dans un évidement respectif dans une surface extérieure de ladite plaque de noyau (1103) et étant espacé autour de ladite plaque de noyau, ladite pluralité de dispositifs de réglage de plaque de noyau (3001) chacun pouvant fonctionner pour se déplacer entre une position rétractée et une position étendue, où ledit au moins un dispositifs de réglage de plaque de noyau (3001) comprend une partie d'engagement (3008) avec une surface d'engagement (3023), et ledit moule (1100) pouvant fonctionner de sorte que, lorsque chacun desdits dispositifs de réglage de plaque de noyau (3001) se trouve dans ladite position étendue, ladite surface d'engagement (3023) fournisse une distance accrue entre ladite plaque de noyau (1103) et ladite plaque d'extraction (1117) pour régler ainsi ladite hauteur de fermeture de moule.

9. Moule à injection (1100) tel que revendiqué dans la revendication 8, dans lequel ladite au moins un dispositif de réglage de plaque de noyau (3001) comprend en outre un dispositif d'actionnement (3045) et un mécanisme de liaison pouvant fonctionner pour interconnecter lesdites parties d'entraînement (3006) de ladite pluralité de dispositifs de réglage de plaque de noyau (3001) audit dispositif d'actionnement (3045).

10. Moule à injection (1100) tel que revendiqué dans la revendication 9, dans lequel ledit mécanisme de liaison comprend une tige de liaison commune (3030) et une barre transversale d'actionnement (3035) interconnectant une pluralité de dispositifs de réglage de plaque de noyau (3001) audit dispositif d'actionnement (3045), et où au moins une partie de chacune de ladite tige de liaison (3030), de ladite barre transversale d'actionnement (3035) et dudit dispositif d'actionnement (3045) est incorporée dans ladite plaque de noyau (1103).

11. Moule à injection (1100) selon l'une quelconque des revendications 3 à 10, dans lequel ladite deuxième moitié de moule (1223) comprend une plaque de cavité (1110), ledit appareil de réglage de hauteur de fermeture de moule comprenant en outre un mécanisme de réglage de plaque de cavité (2000) associé à ladite plaque de cavité (1110), ledit mécanisme de réglage de plaque de cavité (2000) pouvant fonctionner pour régler ladite hauteur de fermeture de moule.

12. Moule à injection (1100) selon la revendication 11, dans lequel ledit mécanisme de réglage de plaque de cavité (2000) comporte un dispositif de réglage de plaque de cavité (2001) au moins partiellement reçu dans un évidement dans une surface extérieure de ladite plaque de cavité (1110) de ladite deuxième moitié de moule (1223), ledit dispositif de réglage de plaque de cavité (2001) pouvant fonctionner pour se déplacer entre une position rétractée et une position étendue, où ledit dispositif de réglage de plaque de cavité (2001) a une partie d'engagement (2008) avec une surface d'engagement (2023), et ledit moule (1100) pouvant fonctionner de sorte que, lorsque ledit dispositif de réglage de plaque de cavité (2001) se trouve dans ladite position étendue, ladite surface d'engagement (2023) fournisse une distance accrue entre ladite plaque de cavité (1110) et une plaque d'extraction (1117) de ladite première moitié de moule (1222) pour régler ainsi ladite hauteur de fermeture de moule.

13. Moule à injection (1100) tel que revendiqué dans la revendication 12, dans lequel ladite partie d'engagement (2008) peut fonctionner pour se déplacer généralement dans une première direction lors du déplacement entre ladite position rétractée et ladite position étendue et dans lequel ledit dispositif de réglage de plaque de cavité (2001) comprend en outre une partie d'entraînement (2006) positionnée de manière adjacente à ladite partie d'engagement (2008), ladite partie d'entraînement (2006) pouvant fonctionner pour se déplacer dans une deuxième direction généralement orthogonale à ladite première direction.

14. Moule à injection (1100) tel que revendiqué dans la revendication 13, dans lequel ledit au moins un dispositif de réglage de plaque de cavité (2001) comprend en outre un dispositif d'actionnement (2045) et un mécanisme de liaison pouvant fonctionner pour interconnecter ladite partie d'entraînement (2006) audit dispositif d'actionnement (2045).

15. Moule à injection (1100) tel que revendiqué dans la revendication 14, dans lequel au moins une partie de chacun dudit mécanisme de liaison et dudit dispositif d'actionnement (2001) est incorporée dans ladite plaque de cavité (1110).

16. Moule à injection (1100) tel que revendiqué dans la revendication 12, dans lequel ledit mécanisme de réglage de plaque de cavité (2000) comprend une pluralité de dispositifs de réglage de plaque de cavité (2001), chacun étant au moins partiellement reçu dans un évidement respectif dans une surface extérieure de ladite plaque de cavité (1110) et étant espacé autour de ladite plaque de cavité (1110), ladite pluralité de dispositifs de réglage de plaque de cavité (2001) pouvant fonctionner pour se déplacer entre une position rétractée et une position étendue, où ledit au moins un dispositif de réglage de plaque de cavité (2001) comprend une partie d'engagement (2008) avec une surface d'engagement (2023), et ledit moule pouvant fonctionner de sorte que, lorsque chacun desdits dispositifs de réglage de plaque de cavité (2001) se trouve dans ladite position étendue, ladite surface d'engagement (2023) fournisse une distance accrue entre ladite plaque de cavité (1110) et ladite plaque d'extraction (1117) pour régler ainsi ladite hauteur de fermeture de moule.

17. Moule à injection (1100) tel que revendiqué dans la revendication 16, dans lequel ledit au moins un dispositif de réglage de plaque de cavité (2001) comprend en outre un dispositif d'actionnement (2045) et un mécanisme de liaison pour interconnecter lesdites parties d'entraînement (2006) de ladite pluralité de dispositifs de réglage de plaque de cavité audit dispositif d'actionnement.

18. Moule à injection (1100) tel que revendiqué dans la revendication 17, dans lequel au moins une partie de chacun dudit mécanisme de liaison et dudit dispositif d'actionnement (2045) est incorporée dans ladite plaque de cavité (1110).

19. Moule à injection (1100) tel que revendiqué dans la revendication 18, dans lequel ledit mécanisme de liaison comprend une tige de liaison commune (2030) et une barre d'actionnement (2035) interconnectant une pluralité de dispositifs de réglage de plaque de cavité audit dispositif d'actionnement.

20. Moule à injection (1100) selon l'une quelconque des revendications 3 à 19, dans lequel ledit mécanisme de réglage de bague de goulot (4000) comporte un dispositif de poussée (4012) associé à une plaque de noyau (1103) de ladite première moitié de moule (1222), ledit dispositif de poussée (4012) pouvant fonctionner pour s'engager avec un élément de liaison (4030), ledit élément de liaison étant relié à au moins une barre coulissante (1115) associée à chacun d'une pluralité de dispositifs de bague de goulot (4014a, 4014b), ledit dispositif de poussée (4012) pouvant fonctionner pour être déplacé par un dispositif d'actionnement (3045) pour déplacer ledit élément de liaison (4030) afin de déplacer ainsi ladite au moins une barre coulissante (1115) et de déplacer ainsi lesdits dispositifs de bague de goulot (4014a, 4014b) entre une première configuration de fonctionnement et une deuxième configuration de fonctionnement.
